(19) Europäisches Patentamt
European Patent Office
Office européen des brevets

(11) EP 3 795 628 A1

(12) EUROPEAN PATENT APPLICATION
published in accordance with Art. 153(4) EPC

(43) Date of publication:
24.03.2021 Bulletin 2021/12

(21) Application number: 19804263.2

(22) Date of filing: 15.05.2019

(51) Int Cl.:
*C08L 15/00* (2006.01) *B60C 1/00* (2006.01)
*C08C 19/25* (2006.01) *C08K 3/36* (2006.01)
*C08K 5/54* (2006.01) *C08L 91/00* (2006.01)

(86) International application number:
PCT/JP2019/019334

(87) International publication number:
WO 2019/221179 (21.11.2019 Gazette 2019/47)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
KH MA MD TN

(30) Priority: 16.05.2018 JP 2018094661

(71) Applicant: The Yokohama Rubber Co., Ltd.
Tokyo 105-8685 (JP)

(72) Inventors:
- SATO, Masaki
  Hiratsuka City, Kanagawa 2548601 (JP)
- KAZARIYA, Ayaki
  Hiratsuka City, Kanagawa 2548601 (JP)
- SAWA, Hideaki
  Hiratsuka City, Kanagawa 2548601 (JP)
- ASHIURA, Makoto
  Hiratsuka City, Kanagawa 2548601 (JP)

(74) Representative: Dilg, Haeusler, Schindelmann
Patentanwaltsgesellschaft mbH
Leonrodstraße 58
80636 München (DE)

# (54) RUBBER COMPOSITION FOR TIRE TREAD FOR WINTER AND PNEUMATIC TIRE FOR WINTER

(57) The present invention provides: a rubber composition for a tire tread for winter which is excellent in wet performance and performance on icy and snowy roads when used in a tire; and a pneumatic tire for winter including the rubber composition. The present invention relates to a rubber composition for a tire tread for winter, containing: a conjugated diene rubber containing 30 mass% or greater of a specific conjugated diene rubber; a plasticizer containing a specific plasticizer; silica; and a silane coupling agent, a content of the specific plasticizer being 5 parts by mass or greater per 100 parts by mass of the conjugated diene rubber; a content of the silica being 30 parts by mass or greater per 100 parts by mass of the conjugated diene rubber; a content of the silane coupling agent being from 3 to 30 mass% with respect to the content of the silica; the specific plasticizer being a plasticizer having a glass transition temperature of -50°C or lower; and an average glass transition temperature of the conjugated diene rubber and the plasticizer being lower than -50°C.

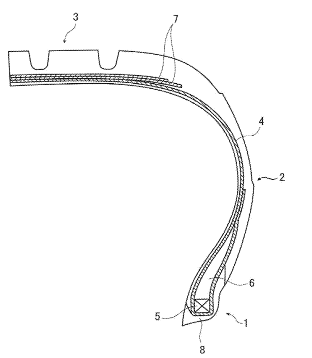


FIG. 1

EP 3 795 628 A1

## Description

### Technical Field

The present invention relates to a rubber composition for a tire tread for winter and a pneumatic tire for winter.

### Background Art

In recent years, in terms of safety when a vehicle is traveling, improvement of wet performance (wet gripping performance) (braking performance on wet road surfaces) is required. Improvement of tire rolling performance (low rolling resistance) has also been demanded from the perspective of fuel efficiency when a vehicle is traveling. A known method of improving the wet performance and the rolling performance is a method of blending silica in a rubber component constituting a tread portion of a tire.

However, silica has low affinity with rubber components, and the cohesiveness between silica is high, so if silica is simply blended to the rubber component, the silica is not dispersed, which leads to the problem that the effect of improving the wet performance and the rolling performance cannot be achieved sufficiently.

In addition to the wet grip performance and the like, tires for winter, which may be used on icy and snowy road surfaces, have also been demanded to have superior performance on icy and snowy roads, namely, braking performance on icy and snowy roads.

Under such a circumstance, for example, Claim 1 of Patent Document 1 proposes a rubber composition for a tire, containing a conjugated diene rubber produced by a method for producing a conjugated diene rubber including steps A, B, and C in this order (Claim 1), and sets forth a tire for winter in which this rubber composition is used in a tread (Claims 5 and 6). Patent Document 1 describes that the rubber composition for a tire exhibits excellent wet performance and performance on icy and snowy roads when used in a tire.

### Citation List

### Patent Literature

Patent Document 1: JP 2016-47886 A

### Summary of Invention

### Technical Problem

Recently, in step with improvements in the required safety level, there has been a demand for further improvements in wet performance, performance on icy and snowy roads, and the like of tires.

Under such circumstances, the present inventors prepared a rubber composition for a tire tread by referring to the Examples of Patent Document 1 and evaluated the wet performance when it was used in a tire and the performance on icy and snowy roads when it was used in a tire. So, it has been clarified that further improvements are desirable, by taking into consideration the demand which will be further increased in the future.

An object of the present invention is to provide: a rubber composition for a tire tread for winter which is excellent in wet performance when used in a tire and performance on icy and snowy roads when used in a tire; and a pneumatic tire for winter including the rubber composition for a tire tread for winter.

### Solution to Problem

As a result of diligent research on the problems described above, the present inventors have found that the problems described above can be solved by using a specific conjugated diene rubber, and completed the present invention.

Specifically, the inventors of the present invention found that the problems described above can be solved by the following features.

[1] A rubber composition for a tire tread for winter, containing:

a conjugated diene rubber containing 30 mass% or greater of a specific conjugated diene rubber;
a plasticizer containing a specific plasticizer;
silica; and

a silane coupling agent,
a content of the specific plasticizer being 5 parts by mass or greater per 100 parts by mass of the conjugated diene rubber;
a content of the silica being 30 parts by mass or greater per 100 parts by mass of the conjugated diene rubber;
a content of the silane coupling agent being from 3 to 30 mass% with respect to the content of the silica;
the specific conjugated diene rubber being a conjugated diene rubber produced by a method for producing a conjugated diene rubber, the method containing: a first step of polymerizing a monomer containing a conjugated diene compound using a polymerization initiator in an inert solvent to produce a conjugated diene polymer chain having an active terminal; a second step of reacting the conjugated diene polymer chain having an active terminal with a polyorganosiloxane represented by General Formula (1) by adding the polyorganosiloxane to the conjugated diene polymer chain having an active terminal in a proportion of 1 mole or greater in terms of number of repeating units of the siloxane structure (-Si-O-) in the polyorganosiloxane relative to 1 mol of the polymerization initiator used in the first step; and a third step of reacting, with a compound represented by General Formula (2), the conjugated diene polymer chain reacted with the polyorganosiloxane in the second step; and
the specific plasticizer being a plasticizer having a glass transition temperature of -50°C or lower; and
an average glass transition temperature of the conjugated diene rubber and the plasticizer being lower than -50°C.

[2] The rubber composition for a tire tread for winter according to [1],
wherein the conjugated diene rubber further comprises a conjugated diene rubber (y) other than the specific conjugated diene rubber, and
wherein an absolute value of a difference between a glass transition temperature of the specific conjugated diene rubber and a glass transition temperature of the conjugated diene rubber (y) is 30°C or higher.
[3] The rubber composition for a tire tread for winter according to [1] or [2], wherein the glass transition temperature of the specific conjugated diene rubber is -60°C or lower.
[4] The rubber composition for a tire tread for winter according to [1] or [2], wherein the glass transition temperature of the specific conjugated diene rubber is higher than -60°C.
[5] The rubber composition for a tire tread for winter according to [1], wherein the conjugated diene rubber comprises a specific conjugated diene rubber (T1) having a glass transition temperature of higher than -60°C and a specific conjugated diene rubber (T2) having a glass transition temperature of - 60°C or lower.
[6] The rubber composition for a tire tread for winter according to any one of [1] to [5], wherein the content of the silica is not less than 100 parts by mass per 100 parts by mass of the conjugated diene rubber.
[7] The rubber composition for a tire tread according to any one of [1] to [6],
wherein the specific conjugated diene rubber contains:

a polymer block (A) containing from 80 to 100 mass% of an isoprene monomer unit and from 0 to 20 mass% of an aromatic vinyl monomer unit; and
a polymer block (B) containing from 50 to 100 mass% of a 1,3-butadiene monomer unit and from 0 to 50 mass% of an aromatic vinyl monomer unit,
the polymer block (A) and the polymer block (B) being formed in continuity.

[8] The rubber composition for a tire tread for winter according to any one of [1] to [7], wherein the glass transition temperature of the specific plasticizer is -60°C or lower.
[9] The rubber composition for a tire tread for winter according to any one of [1] to [8], wherein the content of the specific plasticizer is from 5 to 100 mass% relative to the total amount of the plasticizer.
[10] The rubber composition for a tire tread for winter according to any one of [1] to [9], wherein the specific plasticizer comprises at least one type of plasticizer (p1) selected from the group consisting of paraffin oil, liquid polybutadiene, and phosphoric acid ester.
[11] The rubber composition for a tire tread for winter according to [10], wherein the liquid polybutadiene has a weight average molecular weight from 2000 to 100000.
[12] A pneumatic tire for winter comprising a tire tread portion produced by using the rubber composition for a tire tread for winter described in any one of [1] to [11].

## Advantageous Effects of Invention

The present invention can provide a rubber composition for a tire tread for winter which is excellent in wet performance when used in a tire (hereinafter also referred to simply as "wet performance") and performance on icy and

snowy roads when used in a tire (hereinafter also referred to simply as "performance on icy and snowy roads"); and a pneumatic tire for winter including the rubber composition for a tire tread for winter.

Brief Description of Drawings

FIG. 1 is a partial cross-sectional schematic view of a pneumatic tire for winter according to an embodiment of the present invention.

Description of Embodiments

Hereinafter, a rubber composition for a tire tread for winter and a pneumatic tire for winter including the rubber composition for a tire tread for winter according to an embodiment of the present invention will be described.
In the present specification, numerical ranges indicated using "(from)... to..." include the former number as the lower limit value and the latter number as the upper limit value.
Furthermore, for each of the components contained in the rubber composition for a tire tread for winter according to an embodiment of the present invention, one type may be used alone or two or more types may be used in combination. Here, when two or more types for each of the components are used in combination, the content of the corresponding component refers to the total content unless otherwise specified.
Furthermore, in the present specification, "(meth)acryl" represents "acryl" or "methacryl", and "(meth)acrylonitrile" represents "acrylonitrile" or "methacrylonitrile".
Also, the glass transition temperature may also be abbreviated as "Tg" herein.

[1] Rubber composition for tire tread for winter

The rubber composition for a tire tread for winter according to an embodiment of the present invention (hereinafter, also referred to as "composition according to an embodiment of the present invention") contains a conjugated diene rubber containing 30 mass% or greater of a specific conjugated diene rubber, a plasticizer containing a specific plasticizer, silica, and a silane coupling agent.
A content of the specific plasticizer is 5 parts by mass or greater per 100 parts by mass of the conjugated diene rubber.
A content of the specific plasticizer is 30 parts by mass or greater per 100 parts by mass of the conjugated diene rubber.
A content of the silane coupling agent is from 3 to 30 mass% with respect to the content of the silica.
Also, the specific conjugated diene rubber is a conjugated diene rubber produced by a method for producing a conjugated diene rubber, the method including:

a first step of polymerizing a monomer containing a conjugated diene compound using a polymerization initiator in an inert solvent to produce a conjugated diene polymer chain having an active terminal;
a second step of reacting the conjugated diene polymer chain having an active terminal with a polyorganosiloxane represented by General Formula (1) below by adding the polyorganosiloxane to the conjugated diene polymer chain having an active terminal in a proportion of 1 mole or greater in terms of number of repeating units of the siloxane structure (-Si-O-) in the polyorganosiloxane relative to 1 mol of the polymerization initiator used in the first step; and
a third step of reacting, with a compound represented by General Formula (2) below, the conjugated diene polymer chain reacted with the polyorganosiloxane in the second step.

The specific plasticizer is a plasticizer having a glass transition temperature of -50°C or lower.
An average glass transition temperature of the conjugated diene rubber and the plasticizer is lower than -50°C.
Note that, in the present invention, when the plasticizer is a conjugated diene rubber, the conjugated diene rubber as the plasticizer does not correspond to the "conjugated diene rubber (containing 30 mass% or greater of a specific conjugated diene rubber)" contained in the composition according to an embodiment of the present invention.
It is thought that the composition according to an embodiment of the present invention can achieve the effects described above because of having such a configuration. Although the reason is not clear, it is assumed to be as follows.
As described above, the composition according to an embodiment of the present invention contains a silica. The silica is expected to provide both wet performance and performance on icy and snowy roads at high levels, but is easily agglomerated, and in fact, there is a problem in that the above effects are not satisfactorily achieved. Furthermore, there is a problem that processability will be negatively affected due to aggregation of silica.
On the other hand, because the specific conjugated diene rubber contained in the composition according to an embodiment of the present invention has a polyorganosiloxane structure having a structure similar to that of the silica,

it is thought that the polyorganosiloxane structure has affinity with the silica and prevents aggregation of the silica. Furthermore, because the specific conjugated diene rubber also has a structure derived from a nitrogen atom-containing silane such as aminosilane, this is thought to promote silanization between the silane coupling agent and the silica and further suppress aggregation of the silica. Thus, it is thought that the effects of the silica (that, both wet performance and performance on icy and snowy roads are achieved at high levels) are sufficiently exhibited. Furthermore, excellent processability is considered to be obtained.

Each of the components included in the composition according to an embodiment of the present invention will be described in detail below.

[1] Conjugated diene rubber

The conjugated diene rubber contained in the composition according to an embodiment of the present invention contains 30 mass% or greater of a specific conjugated diene rubber.

First, the specific conjugated diene rubber will be described.

Specific conjugated diene rubber

The specific conjugated diene rubber contained in the composition according to an embodiment of the present invention is a conjugated diene rubber produced by a method for producing a conjugated diene rubber including the following first to third steps.

(1) First step

A first step of polymerizing a monomer containing a conjugated diene compound using a polymerization initiator in an inert solvent to produce a conjugated diene polymer chain having an active terminal.

(2) Second step

A second step of reacting the conjugated diene polymer chain having an active terminal with a polyorganosiloxane represented by General Formula (1) below by adding the polyorganosiloxane to the conjugated diene polymer chain having an active terminal in a proportion of 1 mole or greater in terms of number of repeating units of the siloxane structure (-Si-O-) in the polyorganosiloxane relative to 1 mol of the polymerization initiator used in the first step.

(3) Third step

A third step of reacting, with a compound represented by General Formula (2) below, the conjugated diene polymer chain reacted with the polyorganosiloxane in the second step.

First, reasons for identifying the specific conjugated diene rubber by the production method as described above will be described.

As described above, in the third step, a compound represented by General Formula (2) below is reacted with the conjugated diene polymer chain reacted with the polyorganosiloxane in the second step. The $A^1$ contained in the compound represented by General Formula (2) reacts with a reactive residue generated by the reaction between the conjugated diene polymer chain having an active terminal and the polyorganosiloxane, and binds thereto. However, as will be described below, the reaction residue generated by the reaction between the conjugated diene polymer chain having an active terminal and the polyorganosiloxane can take a variety of structures. So, the structure after the compound represented by General Formula (2) reacts with the reaction residue is extremely complex, and it is technically impossible to analyze the structure, or requires significantly excessive economic expenditure and time to perform the task of identifying the structure. Accordingly, there is a so-called "impossible/impractical circumstance" in describing the specific conjugated diene rubber as "conjugated diene rubber produced by a method for producing a conjugated diene rubber including the first to third steps".

Hereinafter, the steps will be described.

First step

The first step is a step of polymerizing a monomer containing a conjugated diene compound using a polymerization initiator in an inert solvent to produce a conjugated diene polymer chain having an active terminal.

First, the components used in the first step will be described.

Conjugated diene compound

In the first step, the conjugated diene compound used as a monomer to produce the conjugated diene polymer chain having an active terminal is not particularly limited, but examples thereof can include 1,3-butadiene, isoprene, 2,3-dimethyl-1,3-butadiene, 2-phenyl-1,3-butadiene, 1,3-pentadiene, 2-methyl-1,3-pentadiene, 1,3-hexadiene, 4,5-diethyl-1,3-octadiene, and 3-butyl-1,3-octadiene. Among these, from the perspective of achieving superior effects of an embodiment of the present invention, 1,3-butadiene and isoprene are preferred. One type of conjugated diene compound may be used alone, or two or more types thereof may be used in combination.

Aromatic vinyl compound

In addition, in the first step, an aromatic vinyl compound may be used together with the conjugated diene compound as the monomer used in the polymerization. Examples of the aromatic vinyl compound used as the monomer include styrene, methylstyrene, ethylstyrene, t-butylstyrene, α-methylstyrene, α-methyl-p-methylstyrene, chlorostyrene, bromostyrene, methoxystyrene, dimethylaminomethylstyrene, dimethylaminoethylstyrene, diethylaminomethylstyrene, diethylaminoethylstyrene, cyanoethylstyrene, and vinylnaphthalene. Among these, from the perspective of achieving superior effects of an embodiment of the present invention, styrene is preferred.

From the perspective of achieving superior effects of an embodiment of the present invention, the conjugated diene polymer chain having an active terminal obtained in the first step contains: preferably from 50 to 100 mass%, and more preferably from 52 to 95 mass% of a conjugated diene monomer unit; and preferably from 0 to 50 mass%, and more preferably from 5 to 48 mass% of an aromatic vinyl monomer unit.

Other copolymerizable compounds

Furthermore, compounds that can be copolymerized with the conjugated diene compound (other copolymerizable compounds), other than the aromatic vinyl compound, may be used together with the conjugated diene compound in the first step. Examples of such compounds that can be copolymerized with the conjugated diene compound include chain olefin compounds such as ethylene, propylene and 1-butene; cyclic olefin compounds such as cyclopentene and 2-norbornene; non-conjugated diene compounds such as 1,5-hexadiene, 1,6-heptadiene, 1,7-octadiene, dicyclopentadiene, and 5-ethylidene-2-norbornene; (meta)acrylic acid esters such as methyl (meth)acrylate, ethyl (meth)acrylate, and butyl (meth)acrylate; and other (meth)acrylic acid derivatives such as (meth)acrylonitrile and (meth)acrylamide. From the perspective of achieving superior effects of an embodiment of the present invention, these compounds that can be copolymerized with the conjugated diene compound are contained, in an amount of preferably 10 mass% or less, and more preferably 5 mass% or less, as the monomer unit, in the conjugated diene polymer chain having an active terminal obtained in the first step.

Inert solvent

The inert solvent used in the polymerization is not particularly limited as long as the inert solvent is the one normally used in solution polymerization and does not hinder the polymerization reaction. Specific examples of the inert solvent include chain aliphatic hydrocarbons such as butane, pentane, hexane, and heptane; alicyclic hydrocarbons such as cyclopentane and cyclohexane; and aromatic hydrocarbons such as benzene, toluene, and xylene. A single inert solvent may be used alone, or two or more inert solvents may be used in combination. The amount of the inert solvent used is not particularly limited, but is an amount such that the monomer concentration is, for example, from 1 to 50 mass%, and, from the perspective of achieving superior effects of an embodiment of the present invention, preferably from 10 to 40 mass%.

Polymerization initiator

The polymerization initiator used in the polymerization is not particularly limited as long as the polymerization initiator is capable of polymerizing a monomer containing a conjugated diene compound to give a conjugated diene polymer chain having an active terminal. Specific examples thereof can include polymerization initiators each containing an organic alkali metal compound, an organic alkaline earth metal compound, a lanthanide-series metal compound, or the like as a primary catalyst. Examples of the organic alkali metal compound include organic monolithium compounds such as n-butyllithium, sec-butyllithium, t-butyllithium, hexyl lithium, phenyl lithium, and stilbene lithium; organic polylithium compounds such as dilithiomethane, 1,4-dilithiobutane, 1,4-dilithio-2-ethylcyclohexane, 1,3,5-trilithiobenzene, and 1,3,5-tris(lithiomethyl)benzene; organic sodium compounds such as sodium naphthalene; and organic potassium compounds such as potassium naphthalene. Examples of the organic alkali earth metal compound include di-n-butylmagnesium, di-n-hexylmagnesium, diethoxycalcium, calcium distearate, di-t-butoxystrontium, diethoxybarium, diisopropoxybarium, diethylmercaptobarium, di-t-butoxybarium, diphenoxybarium, diethylaminobarium, barium distearate, and diketylbarium Examples of the polymerization initiators having a lanthanide-series metal compound as a primary catalyst include polymerization initiators containing a primary catalyst of a lanthanide-series metal salt containing a lanthanide-series metal such as lanthanum, cerium, praseodymium, neodymium, samarium, and gadolinium, and a carboxylic acid or phosphorus-containing organic acid, together with a promoter such as an alkylaluminum compound, organoaluminum hydride compound, or organoaluminum halide compound. Among these polymerization initiators, organic monolithium compounds and organic poly-lithium compounds are preferably used, organic monolithium compounds are more preferably used, and n-butyllithium is particularly preferably used, from the perspective of achieving superior effects of an embodiment of the present invention.

Furthermore, the organic alkali metal compound may be used as an organic alkali metal amide compound after first reacting it with a secondary amine compound such as dibutylamine, dihexylamine, dibenzylamine, pyrrolidine, piperidine, hexamethyleneimine or heptamethyleneimine. A single polymerization initiator may be used alone, or two or more polymerization initiators may be used in combination.

Examples of the organic alkali metal amide compound include compounds obtained by reacting a secondary amine compound with an organic alkali metal compound. Among these, a compound represented by General Formula (3) below can be suitably used from the perspective of achieving superior effects of an embodiment of the present invention.

[Chemical Formula 1]

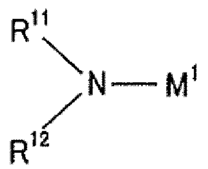

(3)

In General Formula (3), $M^1$ represents an alkali metal atom; $R^{11}$ and $R^{12}$ each independently represent an alkyl group, a cycloalkyl group, an aryl group, an aralkyl group, a protecting group for an amino group, or a group capable of undergoing hydrolysis to yield a hydroxyl group; $R^{11}$ and $R^{12}$ may be bonded together to form a ring structure with the nitrogen atom to which they are attached, and when forming the ring structure, a ring structure may be formed together with a heteroatom other than the nitrogen atom to which they are attached, in addition to the nitrogen atom to which they are attached.

The alkyl group is not particularly limited, but from the perspective of achieving superior effects of an embodiment of the present invention, an alkyl group having from 1 to 20 carbons is preferable, and an alkyl group having from 1 to 10 carbons is more preferable. Examples of sch an alkyl group include alkyl groups such as a methyl group, an ethyl group, an n-propyl group, an isopropyl group, an n-butyl group, an isobutyl group, a sec-butyl group, a tert-butyl group, an n-pentyl group, an n-hexyl group, an n-heptyl group, an n-octyl group, and an n-decyl group.

The cycloalkyl group is not particularly limited, but from the perspective of achieving superior effects of an embodiment of the present invention, a cycloalkyl group having from 3 to 20 carbons is preferable, and a cycloalkyl group having from 3 to 12 carbons is more preferable. Examples of such a cycloalkyl group include a cyclopropyl group, a cyclopentyl group, a cyclohexyl group, a cycloheptyl group, a cyclooctyl group, and a cyclododecyl group.

The aryl group is not particularly limited, but from the perspective of achieving superior effects of an embodiment of the present invention, an aryl group having from 6 to 12 carbons is preferable, and an aryl group having from 6 to 10 carbons is more preferable. Examples of such an aryl group include a phenyl group, a 1-naphthyl group, and a 2-naphthyl group.

The aralkyl group is not particularly limited, but from the perspective of achieving superior effects of an embodiment of the present invention, an aralkyl group having from 7 to 13 carbons is preferable, and an aralkyl group having from 7 to 9 carbons is more preferable. Examples of such an aralkyl group include a benzyl group and a phenethyl group.

The protecting group for an amino group is not particularly limited, and may be any group that acts as a protecting group for an amino group, and examples thereof include alkylsilyl groups. Examples of such an alkylsilyl group include a trimethylsilyl group, a triethylsilyl group, a triphenylsilyl group, a methyldiphenylsilyl group, an ethylmethylphenylsilyl group, and a tert-butyldimethylsilyl group.

Note that when $R^{11}$ and/or $R^{12}$ are/is protecting group(s) for an amino group, a structure in which $R^{13}$ and/or $R^{14}$ in General Formula (5) below are/is hydrogen atom(s) can be introduced to one end of the polymer chain forming the resulting conjugated diene rubber by removing the protecting group for an amino group.

The group capable of undergoing hydrolysis to yield a hydroxyl group is not particularly limited, and, for example,

any group that generates a hydroxyl group may be used. Examples of the group include alkoxyalkyl groups, and epoxy group-containing groups.

Examples of the alkoxyalkyl group include a methoxymethyl group, an ethoxymethyl group, an ethoxyethyl group, a propoxymethyl group, a butoxymethyl group, a butoxyethyl group, and a propoxyethyl group.

Examples of the epoxy group-containing group include groups represented by General Formula (4) below.

$$-Z^1-Z^2-E^1 \qquad (4)$$

In General Formula (4), $Z^1$ is an alkylene group or an alkyl arylene group having from 1 to 10 carbons; $Z^2$ is a methylene group, a sulfur atom, or an oxygen atom; and $E^1$ is a glycidyl group.

Additionally, $R^{11}$ and $R^{12}$ may be bonded together to form a ring structure with the nitrogen atom to which they are attached, and in this case, specific examples of the structure formed by the $R^{11}$ and $R^{12}$ and the nitrogen atom to which they are attached include: an azetidine ring ($R^{11}$ and $R^{12}$ are propylene groups), a pyrrolidine ring ($R^{11}$ and $R^{12}$ are butylene groups), a piperidine ring ($R^{11}$ and $R^{12}$ are pentylene groups), and a hexamethyleneimine ring ($R^{11}$ and $R^{12}$ are hexylene groups).

When $R^{11}$ and $R^{12}$ are bonded together to form a ring structure with the nitrogen atom to which they are attached, the ring structure is preferably a 4- to 8-membered ring structure.

In General Formula (3), $M^1$ is an alkali metal atom, and examples of such an alkali metal atom include a lithium atom, a sodium atom, and a potassium atom. Among these, the lithium atom is preferable from the perspective of polymerization activity.

In the first step, when the compound represented by General Formula (3) is used as the polymerization initiator, the amine structure forming the organic alkali metal amide compound remains in a state of being bonded to the polymerization starting end of the polymer chain. Accordingly, when the compound represented by General Formula (3) is used as the polymerization initiator, a structure represented by General Formula (5) below is introduced to one end of the polymer chain forming the resulting conjugated diene rubber.

[Chemical Formula 2]

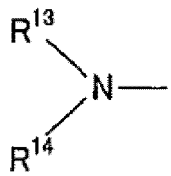

(5)

In General Formula (5), $R^{13}$ and $R^{14}$ each independently represent a hydrogen atom, an alkyl group, a cycloalkyl group, an aryl group, an aralkyl group, a protecting group for an amino group, or a group capable of undergoing hydrolysis to yield a hydroxyl group; $R^{13}$ and $R^{14}$ may be bonded together to form a ring structure with the nitrogen atom to which they are attached, and when forming the ring structure, a ring structure may be formed together with a heteroatom other than the nitrogen atom to which they are attached, in addition to the nitrogen atom to which they are attached.

Examples of the alkyl group, cycloalkyl group, aryl group, aralkyl group, protecting group for an amino group, or group capable of undergoing hydrolysis to yield a hydroxyl group, which can serve as $R^{13}$ or $R^{14}$, include groups identical with those for $R^{11}$ or $R^{12}$ in General Formula (3); and, also when $R^{13}$ and $R^{14}$ are bonded together to form a ring structure with the nitrogen atom to which they are attached, groups identical with those for $R^{11}$ or $R^{12}$ in General Formula (3) can be used.

Note that the hydrogen atoms that can serve as $R^{13}$ or $R^{14}$ are introduced by removing the protecting group for an amino group.

When an organic alkali metal amide compound is used as the polymerization initiator, the obtained specific conjugated diene rubber can have an amine structure at one terminal and a specific structure derived from a modifying agent at the other terminal. The effect of such an amine structure makes the effects of an embodiment of the present invention superior.

The method of adding the organic alkali metal amide compound as the polymerization initiator to the polymerization system is not particularly limited, and there can be adopted a method in which a secondary amine compound is reacted with an organic alkali metal compound to obtain an organic alkali metal amide compound, and this compound is mixed with a monomer containing a conjugated diene compound to advance the polymerization reaction. Alternatively, there may be adopted a method in which the polymerization reaction may be carried out by separately adding an organic alkali metal compound and a secondary amine compound to the polymerization system and mixing them with a monomer containing a conjugated diene compound to generate an organic alkali metal amide compound in the polymerization

system. The reaction conditions such as the reaction temperature are not particularly limited, and, for example, may follow the intended polymerization reaction conditions.

The amount of the secondary amine compound used may be determined in accordance with the targeted amount of the polymerization initiator added, and is ordinarily in the range from 0.01 to 1.5 mmol, preferably from 0.1 to 1.2 mmol, and more preferably from 0.5 to 1.0 mmol per mmol of the organic alkaline metal compound.

The amount of the polymerization initiator used should be determined according to the targeted molecular weight of the conjugated diene polymer chain, and is normally from 1 to 50 mmol, preferably from 1.5 to 20 mmol, more preferably from 2 to 15 mmol, per 1000 g of the monomer.

Polymerization temperature and the like

The polymerization temperature is in the range of ordinarily from -80 to + 150°C, preferably from 0 to 100°C, and more preferably from 30 to 90°C, from the perspective of achieving superior effects of an embodiment of the present invention. As the polymerization mode, any mode such as a batch mode or a continuous mode can be employed, but, when the conjugated diene compound and the aromatic vinyl compound are copolymerized, a batch mode is preferable in that the randomness of the bond between the conjugated diene monomer unit and the aromatic vinyl monomer unit is easily controlled.

Polar compound

When polymerizing the monomer containing the conjugated diene compound, a polar compound is preferably added to the inert organic solvent for the purpose of adjusting the vinyl bond content of the conjugated diene monomer unit in the resulting conjugated diene polymer chain. Examples of the polar compound include ether compounds such as dibutylether, tetrahydrofuran, and 2,2-di(tetrahydrofuryl)propane; tertiary amines such as tetramethylethylenediamine; alkali metal alkoxides; and phosphine compounds. Among these, from the perspective of achieving superior effects of an embodiment of the present invention, ether compounds and tertiary amines are preferable, tertiary amines are more preferable, and tetramethylethylenediamine is particularly preferable. A single polar compound may be used alone, or two or more polar compounds may be used in combination. The amount of the polar compound used should be determined according to the targeted vinyl bond content, but is preferably from 0.001 to 100 mol, and more preferably from 0.01 to 10 mol, relative to 1 mol of the polymerization initiator. When the amount of the polar compound used is within this range, it is easy to adjust the vinyl bond content of the conjugated diene monomer unit, and problems due to deactivation of the polymerization initiator tend not to occur.

Vinyl bond content

The vinyl bond content of the conjugated diene monomer unit in the conjugated diene polymer chain having an active terminal obtained in the first step is preferably from 1 to 90 mass%, more preferably from 3 to 80 mass%, and particularly preferably from 5 to 70 mass%, from the perspective of achieving superior effects of an embodiment of the present invention.

Molecular weight

The weight average molecular weight (Mw) of the conjugated diene polymer chain having an active terminal obtained in the first step is not particularly limited, but is preferably from 100000 to 2000000, more preferably from 200000 to 1500000, particularly preferably from 300000 to 1200000, as a value as measured by gel permeation chromatography in terms of polystyrene, from the perspective of achieving superior effects of an embodiment of the present invention.

The molecular weight distribution expressed as the ratio (Mw/Mn) of the weight average molecular weight (Mw) to the number average molecular weight (Mn) of the conjugated diene polymer chain having an active terminal is also not particularly limited, but is preferably from 1.0 to 3.0, and more preferably from 1.0 to 2.5. When the molecular weight distribution (Mw/Mn) of the conjugated diene polymer chain having an active terminal is within the above range, the conjugated diene rubber is easy to produce.

Preferred embodiment

From the perspective of achieving superior effects of an embodiment of the present invention, the first step is preferably as follows.

That is, the first step preferably includes:

a step (A) of polymerizing a monomer containing isoprene, or isoprene and an aromatic vinyl compound using a polymerization initiator in an inert solvent to form a polymer block (A) having an active terminal containing from 80 to 100 mass% of an isoprene monomer unit and from 0 to 20 mass% of an aromatic vinyl monomer unit; and

a step B of mixing the polymer block (A) having an active terminal described above and a monomer containing 1,3-butadiene or 1,3-butadiene and an aromatic vinyl compound to allow the polymerization reaction to continue, and forming, in continuity with the polymer block (A), a polymer block (B) having an active terminal containing from 50 to 100 mass% of a 1,3-butadiene monomer unit and from 0 to 50 mass% of an aromatic vinyl monomer unit to produce a conjugated diene polymer chain having an active terminal.

Such steps are adopted, and thus the conjugated diene polymer chain having an active terminal obtained in the first step can have a structure (hereinafter also referred to as "PI block") in which a polymer block (A) containing from 80 to 100 mass% of an isoprene monomer unit and from 0 to 20 mass% of an aromatic vinyl monomer unit and a polymer block (B) containing from 50 to 100 mass% of a 1,3-butadiene monomer unit and from 0 to 50 mass% of an aromatic vinyl monomer unit are formed in continuity. In this case, the obtained specific conjugated diene rubber also has a PI block.

Such an aspect will be described below.

Step A

The polymer block (A) formed in step A should contain from 80 to 100 mass% of an isoprene monomer unit and from 0 to 20 mass% of an aromatic vinyl monomer unit, but, from the perspective of achieving superior effects of an embodiment of the present invention, preferably contains from 85 to 95 mass% of an isoprene monomer unit and from 5 to 15 mass% of an aromatic vinyl monomer unit, and more preferably contains from 89 to 95 mass% of an isoprene monomer unit and from 5 to 11 mass% of an aromatic vinyl monomer unit.

The aromatic vinyl compound used to form the aromatic vinyl monomer unit contained in the polymer block (A) can be the same aromatic vinyl compounds as described above, and styrene is preferable among these from the perspective of achieving superior effects of an embodiment of the present invention. A single aromatic vinyl compound may be used alone, or two or more aromatic vinyl compounds may be used in combination.

The polymer block (A) is preferably constituted by an isoprene monomer unit alone or an isoprene monomer unit and an aromatic vinyl monomer unit from the perspective of achieving superior effects of an embodiment of the present invention; optionally, other monomeric units may be contained in addition to the isoprene monomer unit or the isoprene monomer unit and the aromatic vinyl monomer unit. Examples of other compounds used to form the other monomer units include conjugated diene compounds other than isoprene such as 1,3-butadiene, 2,3-dimethyl-1,3-butadiene, 2-chloro-1,3-butadiene, 1,3-pentadiene, and 1,3-hexadiene; $\alpha$- and $\beta$-unsaturated nitriles such as acrylonitrile and methacrylonitrile; unsaturated carboxylic acids or acid anhydrides such as acrylic acid, methacrylic acid, and maleic anhydride; unsaturated carboxylic acid esters such as methylmethacrylate, ethylacrylate, and butylacrylate; and non-conjugated dienes such as 1,5-hexadiene, 1,6-heptadiene, 1,7-octadiene, dicyclopentadiene, and 5-ethylidene-2-norbornene. Among these, from the perspective of achieving superior effects of an embodiment of the present invention, 1,3-butadiene is preferable. Such other monomers may be used alone, or a combination of two or more types may be used. A content proportion of the other monomer units in the polymer block (A) is preferably 20 mass% or less, more preferably 10 mass% or less, and further preferably 6 mass% or less from the perspective of achieving superior effects of an embodiment of the present invention.

In the present invention, the polymer block (A) in the conjugated diene polymer chain is formed by polymerizing a monomer containing isoprene or isoprene and an aromatic vinyl compound using a polymerization initiator in an inert solvent. The formed polymer block (A) will have an active terminal.

The same inert solvents as described above may be used as the inert solvent used for the polymerization of a monomer containing isoprene or isoprene and an aromatic vinyl compound to form the polymer block (A). The amount of the inert solvent used is an amount such that the monomer concentration is preferably from 1 to 80 mass%, and more preferably from 10 to 50 mass%, from the perspective of achieving superior effects of an embodiment of the present invention.

The polymerization initiator used to form the polymer block (A) is not particularly limited as long as the polymerization initiator is capable of polymerizing a monomer containing isoprene or isoprene and an aromatic vinyl compound to give a polymer chain having an active terminal. Specific examples thereof include the same polymerization initiators as described above.

The amount of the polymerization initiator used should be determined according to the targeted molecular weight, but is preferably from 4 to 250 mmol, more preferably from 6 to 200 mmol, and particularly preferably from 10 to 70 mmol, per 100 g of the monomer containing isoprene or isoprene and an aromatic vinyl compound, from the perspective of achieving superior effects of an embodiment of the present invention.

The polymerization temperature when polymerizing the monomer containing isoprene or isoprene and an aromatic vinyl compound is normally from -80 to 150°C, preferably from 0 to 100°C, and more preferably from 20 to 90°C, from the perspective of achieving superior effects of an embodiment of the present invention. The polymerization mode may be any mode such as a batch mode or a continuous mode. Furthermore, the bonding mode can be a variety of bonding modes such as blocky, tapered, and random bonding modes.

To adjust the vinyl bond content of the isoprene monomer unit in the polymer block (A), a polar compound is preferably added to the inert solvent at the time of polymerization, from the perspective of achieving superior effects of an embodiment of the present invention. The polar compound can be the same polar compound as described above. The amount of the polar compound used should be determined according to the targeted vinyl bond content, but is preferably from 0.01 to 30 mol, and more preferably from 0.05 to 10 mol, relative to 1 mol of the polymerization initiator. When the amount of the polar compound used is within this range, it is easy to adjust the vinyl bond content of the isoprene monomer unit, and problems due to deactivation of the polymerization initiator tend not to occur. In addition, the vinyl bond content of the isoprene monomer unit can be increased by increasing the amount of polar the compound used within the range described above.

From the perspective of achieving superior effects of an embodiment of the present invention, the vinyl bond content of the isoprene monomer unit in the polymer block (A) is preferably from 5 to 90 mass%, and more preferably from 5 to 80 mass%. Note that, in the present specification, the vinyl bond content of the isoprene monomer unit refers to the proportion of the total amount of isoprene monomer units having the 1,2-structure and the 3,4-structure in the isoprene monomer units.

The weight average molecular weight (Mw) of the polymer block (A) is preferably from 500 to 15,000, more preferably from 1000 to 12000, and particularly preferably from 1500 to 10000, as a value in terms of polystyrene as measured by gel permeation chromatography, from the perspective of achieving superior effects of an embodiment of the present invention.

The molecular weight distribution expressed as the ratio (Mw/Mn) of the weight average molecular weight (Mw) to the number average molecular weight (Mn) of the polymer block (A) is preferably from 1.0 to 1.5, and more preferably from 1.0 to 1.3, from the perspective of achieving superior effects of an embodiment of the present invention. When the value of molecular weight distribution (Mw/Mn) of the polymer block (A) is within the above range, the conjugated diene rubber is easy to produce.

Step B

The polymer block (B) in the conjugated diene polymer chain formed in step (B) should contain from 50 to 100 mass% of a 1,3-butadiene monomer unit and from 0 to 50 mass% of an aromatic vinyl monomer unit, but, from the perspective of achieving superior effects of an embodiment of the present invention, preferably contains from 52 to 95 mass% of a 1,3-butadiene monomer unit and from 5 to 48 mass% of an aromatic vinyl monomer unit. When a content proportion of the 1,3-butadiene monomer unit and the aromatic vinyl monomer unit is within the range described above, the conjugated diene rubber is easier to produce.

The aromatic vinyl compound used to form the aromatic vinyl monomer unit contained in the polymer block (B) can be the same aromatic vinyl compounds as described above, and styrene is preferable among these from the perspective of achieving superior effects of an embodiment of the present invention.

The polymer block (B) is preferably constituted by a 1,3-butadiene monomer unit alone or a 1,3-butadiene monomer unit and an aromatic vinyl monomer unit from the perspective of achieving superior effects of an embodiment of the present invention; optionally, other monomeric units may be contained in addition to the 1,3-butadiene monomer unit or the 1,3-butadiene monomer unit and the aromatic vinyl monomer unit, as long as the essential properties of an embodiment of the present invention are not impaired. Other monomers used to form the other monomer units may be the same as the compounds exemplified for the polymer block (A) described above (except for 1,3-butadiene). In addition, isoprene may also be used as the other monomers in the polymer block (B). A content proportion of the other monomer units in the polymer block (B) is preferably 50 mass% or less, more preferably 40 mass% or less, and further preferably 35 mass% or less.

The polymer block (B) in the conjugated diene polymer chain is formed in continuity with the polymer block (A) by mixing the polymer block (A) having an active terminal described above and a monomer containing 1,3-butadiene or 1,3-butadiene and an aromatic vinyl compound to allow the polymerization reaction to continue. The formed polymer block (B) will have an active terminal. On the other hand, the active terminal disappears from the polymer block (A).

The inert solvent used for the polymer block (A), the polymerization of a monomer containing 1,3-butadiene or 1,3-butadiene and an aromatic vinyl compound to form the polymer block (B) is not particularly limited, and the same inert solvents as described above may be used.

The amount of the polymer block (A) having an active terminal when forming the polymer block (B) should be determined according to the targeted molecular weight, but is preferably from 0.1 to 5 mmol, more preferably from 0.15

to 2 mmol, and further preferably from 0.2 to 1.5 mmol, per 100 g of the monomer containing 1,3-butadiene or 1,3-butadiene and an aromatic vinyl compound, from the perspective of achieving superior effects of an embodiment of the present invention.

The method of mixing the polymer block (A) and the monomer containing 1,3-butadiene or 1,3-butadiene and an aromatic vinyl compound is not particularly limited. The polymer block (A) having an active terminal may be added to a solution of the monomer containing 1,3-butadiene or 1,3-butadiene and an aromatic vinyl compound, or the monomer containing 1,3-butadiene or 1,3-butadiene and an aromatic vinyl compound may be added to a solution of the polymer block (A) having an active terminal. From the perspective of controlling polymerization, a method in which the polymer block (A) having an active terminal is added to a solution of the monomer containing 1,3-butadiene or 1,3-butadiene and an aromatic vinyl compound.

The polymerization temperature when polymerizing the monomer containing 1,3-butadiene or 1,3-butadiene and an aromatic vinyl compound is normally from -80 to 150°C, preferably from 0 to 100°C, and more preferably from 20 to 90°C, from the perspective of achieving superior effects of an embodiment of the present invention. The polymerization mode may be any mode such as a batch mode or a continuous mode. When the polymer block (B) is a copolymer chain, a batch mode is preferable in that randomness of the bond is easily controlled.

Furthermore, the bonding mode between the respective monomers when the polymer block (B) is a copolymer chain can be a variety of bonding modes such as blocky, tapered, and random bonding modes. Among these, from the perspective of achieving superior effects of an embodiment of the present invention, random bonding mode is preferable. When the bonding mode between the 1,3-butadiene and the aromatic vinyl compound is random, it is preferred that the 1,3-butadiene or the 1,3-butadiene and the aromatic vinyl monomer be supplied and polymerized continuously or intermittently to the polymerization system so that the ratio of the aromatic vinyl compound relative to the total amount of the 1,3-butadiene and the aromatic vinyl monomer is not too high in the polymerization system, from the perspective of achieving superior effects of an embodiment of the present invention.

To adjust the vinyl bond content of the 1,3-butadiene monomer unit in the polymer block (B), a polar compound is preferably added to the inert solvent at the time of polymerization, as is the case with adjustment of the vinyl bond content of the isoprene monomer unit in the polymer block (A), from the perspective of achieving superior effects of an embodiment of the present invention. However, a polar compound does not have to be added again when a polar compound was already added to the inert solvent in an amount sufficient to adjust the vinyl bond content of the 1,3-butadiene monomer unit in the polymer block (B) at the time of preparation of the polymer block (A). The polar compound used to adjust the vinyl bond content can be the same polar compound as described above. The amount of the polar compound used should be determined according to the targeted vinyl bond content, but is preferably from 0.01 to 100 mol, and more preferably from 0.1 to 30 mol, relative to 1 mol of the polymerization initiator used for the first polymerization reaction (polymerization reaction for forming the first polymer block (A)). When the amount of the polar compound used is within this range, it is easy to adjust the vinyl bond content of the 1,3-butadiene monomer unit, and problems due to deactivation of the polymerization initiator tend not to occur.

The vinyl bond content of the 1,3-butadiene monomer unit in the polymer block (B) is preferably from 1 to 90 mass%, more preferably from 3 to 80 mass%, and particularly preferably from 5 to 70 mass%, from the perspective of achieving superior effects of an embodiment of the present invention.

In this way, the conjugated diene polymer chain having an active terminal and having the polymer block (A) and the polymer block (B), can be obtained. The conjugated diene polymer chain having an active terminal is, from the perspective of productivity, constituted by the polymer block (A) - the polymer block (B), and the terminal of the polymer block (B) is preferably an active terminal. However, the conjugated diene polymer chain may have a plurality of polymer blocks (A) or may have other polymer blocks. For example, the conjugated diene polymer chain having an active terminal, for example, the polymer block (A) - the polymer block (B) - the polymer block (A), is indicated. In this case, an active terminal will be formed at the terminal of the polymer block (A) formed in continuity with the polymer block (B). When the polymer block (A) is formed on the active terminal side of the conjugated diene polymer chain, the amount of isoprene used is preferably from 10 to 100 mol, more preferably from 15 to 70 mol, and particularly preferably from 20 to 35 mol relative to 1 mol of the polymerization initiator used for the first polymerization reaction (polymerization reaction for forming the first polymer block (A)), from the perspective of achieving superior effects of an embodiment of the present invention.

The mass ratio of the polymer block (A) to the polymer block (B) in the conjugated diene polymer chain having an active terminal (when there are a plurality of polymer blocks (A) and (B), based on total mass of the respective polymer blocks) is preferably from 0.001 to 0.1, more preferably from 0.003 to 0.07, and particularly preferably from 0.005 to 0.05, as (mass of the polymer block (A))/(mass of the polymer block (B)), from the perspective of achieving superior effects of an embodiment of the present invention.

The content proportions of the total monomer unit of the isoprene monomer unit and the 1,3-butadiene monomer unit and the aromatic vinyl monomer unit in the conjugated diene polymer chain having an active terminal and having the polymer block (A) and the polymer block (B) are preferably from 50 to 100 mass% of the total monomer unit of the

isoprene monomer unit and the 1,3-butadiene monomer unit and from 0 to 50 mass% of the aromatic vinyl monomer unit, and more preferably from 52 to 95 mass% of the total monomer unit of the isoprene monomer unit and the 1,3-butadiene monomer unit and from 5 to 48 mass% of the aromatic vinyl monomer unit, in the conjugated diene polymer chain having an active terminal, from the perspective of achieving superior effects of an embodiment of the present invention. The vinyl bond content of the isoprene monomer unit and the 1,3-butadiene monomer unit in the conjugated diene polymer chain having an active terminal and having the polymer block (A) and the polymer block (B), is preferably within the same range as the vinyl bond content of the 1,3-butadiene monomer unit in the polymer block (B) described above, from the perspective of achieving superior effects of an embodiment of the present invention.

Second step

The second step is a step of reacting the conjugated diene polymer chain having an active terminal obtained in the first step with a polyorganosiloxane represented by General Formula (1) below by adding the polyorganosiloxane to the conjugated diene polymer chain having an active terminal in a proportion of 1 mole or greater in terms of number of repeating units of the siloxane structure (-Si-O-) in the polyorganosiloxane relative to 1 mol of the polymerization initiator used in the first step.

[Chemical Formula 3]

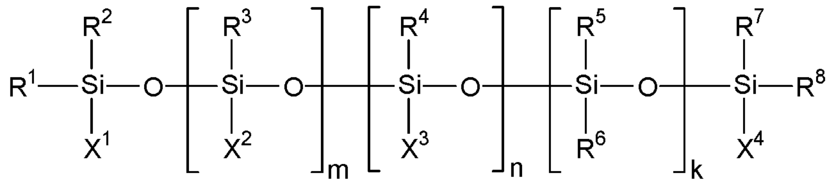

(1)

In General Formula (1), $R^1$ to $R^8$ are alkyl groups having from 1 to 6 carbons or aryl groups having from 6 to 12 carbons and may be the same or different from each other. $X^1$ and $X^4$ are groups selected from the group consisting of alkyl groups having from 1 to 6 carbons, aryl groups having from 6 to 12 carbons, alkoxy groups having from 1 to 5 carbons, and epoxy group-containing groups having from 4 to 12 carbons and may be the same or different from each other. $X^2$ is an alkoxy group having from 1 to 5 carbons or an epoxy group-containing group having from 4 to 12 carbons, and the plurality of $X^2$ groups may be the same or different from each other. $X^3$ is a group containing from 2 to 20 alkylene glycol repeating units, and, when there are a plurality of $X^3$ groups, they may be the same or different from each other. m is an integer from 3 to 200, n is an integer from 0 to 200, k is an integer from 0 to 200, and m +n + k is 3 or greater.

Examples of the alkyl groups having from 1 to 6 carbons that can constitute the $R^1$ to $R^8$, $X^1$, and $X^4$ groups in the polyorganosiloxane represented by General Formula (I) above include a methyl group, an ethyl group, an n-propyl group, an isopropyl group, a butyl group, a pentyl group, a hexyl group, a cyclohexyl group, and the like. Examples of the aryl groups having from 6 to 12 carbons include a phenyl group and a methylphenyl group. Among these, a methyl group and an ethyl group are preferred from the perspective of easiness of production of the polyorganosiloxane itself.

Examples of the alkoxyl groups having from 1 to 5 carbons that can constitute the $X^1$, $X^2$ and $X^4$ groups in the polyorganosiloxanes represented by General Formula (1) include a methoxy group, an ethoxy group, a propoxy group, an isopropoxy group, and a butoxy group. Among these, a methoxy group and an ethoxy group are preferred from the perspective of easiness of production of the polyorganosiloxane itself.

Examples of the epoxy group-containing groups having from 4 to 12 carbons that can constitute $X^1$, $X^2$ and $X^4$ in the polyorganosiloxanes represented by General Formula (1) include groups represented by General Formula (6) below.

$$-Z^3\text{-}Z^4\text{-}E^2 \qquad (6)$$

In General Formula (6), $Z^3$ is an alkylene group or an alkyl arylene group having from 1 to 10 carbons; $Z^4$ is a methylene group, a sulfur atom, or an oxygen atom; and $E^2$ is an epoxy group-containing hydrocarbon group having from 2 to 10 carbons.

In the groups represented by General Formula (6), preferably, $Z^4$ is an oxygen atom; more preferably, $Z^4$ is an oxygen atom and $E^2$ is a glycidyl group; and particularly preferably, $Z^3$ is an alkylene group having from 1 to 3 carbons, and $Z^4$ is an oxygen atom, and $E^2$ is a glycidyl group.

In the polyorganosiloxane represented by General Formula (1), of the above, $X^1$ and $X^4$ are preferably epoxy group-containing groups having from 4 to 12 carbons or alkyl groups having from 1 to 6 carbons, from the perspective of achieving superior effects of an embodiment of the present invention. In addition, of the above, from the perspective

of achieving superior effects of an embodiment of the present invention, an epoxy group-containing group having from 4 to 12 carbons is preferable as $X^2$. Furthermore, from the perspective of achieving superior effects of an embodiment of the present invention, $X^1$ and $X^4$ are alkyl groups having from 1 to 6 carbons, and $X^2$ is more preferably an epoxy group-containing group having from 4 to 12 carbons.

In the polyorganosiloxane represented by General Formula (1), a group represented by Formula (7) below, i.e., a group including from 2 to 20 alkylene glycol repeating units, is preferred as $X^3$, from the perspective of achieving superior effects of an embodiment of the present invention.

[Chemical Formula 4]

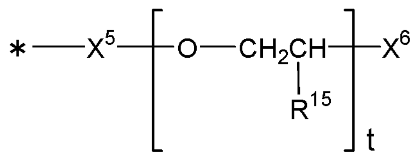

(7)

In General Formula (7), t is an integer from 2 to 20, $X^5$ is an alkylene group or an alkyl arylene group having from 2 to 10 carbons, $R^{15}$ is a hydrogen atom or a methyl group, and $X^6$ is an alkoxy group or an aryloxy group having from 1 to 10 carbons. Among these, preferably, t is an integer from 2 to 8, $X^5$ is an alkylene group having 3 carbons, $R^{15}$ is a hydrogen atom, and $X^6$ is a methoxy group. Note that in General Formula (7), * represents a bond position.

In the polyorganosiloxanes represented by General Formula (1), m is an integer from 3 to 200, preferably from 20 to 150, and more preferably from 30 to 120. When m is 3 or greater, the coupling rate of the resulting conjugated diene rubber will be high, and the effects of an embodiment of the present invention are superior. When m is 200 or less, production of the polyorganosiloxane itself represented by General Formula (1) will be easy and it will be easier to handle the polyorganosiloxane without viscosity being too high.

In the polyorganosiloxanes represented by General Formula (1), n is an integer of from 0 to 200, preferably from 0 to 150, and more preferably from 0 to 120, and k is an integer of from 0 to 200, preferably an integer from 0 to 150, and more preferably from 0 to 130. The total number of m, n, and k is 3 or greater, preferably from 3 to 400, more preferably from 20 to 300, and particularly preferably from 30 to 250. When the total number of m, n and k is 3 or greater, the reaction between the polyorganosiloxane represented by General Formula (1) and the conjugated diene polymer chain having an active terminal will be more likely to proceed. When the total number of m, n and k is 400 or less, production of the polyorganosiloxane itself represented by General Formula (1) will be easy, and it will be easy to handle the polyorganosiloxane without viscosity being too high.

The amount of polyorganosiloxane used in the second step is 1 mol or greater in terms of number of repeating units of the siloxane structure (-Si-O-) in the polyorganosiloxane relative to 1 mol of the polymerization initiator used in the first step described above, and is preferably from 1 to 2.5 mol, and more preferably from 1.1 to 2 mol, from the perspective of achieving superior effects of an embodiment of the present invention.

By setting the amount of polyorganosiloxane used in the first step to 1 mol or greater in terms of number of repeating units of the siloxane structure (-Si-O-) in the polyorganosiloxane relative to 1 mol of the polymerization initiator, of the active terminals of the conjugated diene polymer chain having an active terminal obtained in the first step, substantially all the active terminals can be reacted with the polyorganosiloxane, which is preferable. That is, an alkyl metal group as the active terminal of the conjugated diene polymer chain having the active terminal obtained in the first step, i.e., a group represented by $-R^-M^+$ (wherein R is a hydrocarbon group forming a polymer chain end; and M an alkali metal atom, an alkaline earth metal atom, or a lanthanide series metal atom), does not remain substantially.

In the third step described later, when the compound represented by General Formula (2) is reacted, the compound represented by General Formula (2) can be substantially suppressed from reacting directly with the active terminal of the conjugated diene polymer chain having the active terminal obtained in the first step. Thus, the compound represented by General Formula (2) can be appropriately reacted with the reactive residue generated by the reaction between the conjugated diene polymer chain and the polyorganosiloxane represented by General Formula (1). Furthermore, this allows appropriate introduction of a modified structure according to the compound represented by General Formula (2) into the conjugated diene polymer chain via a structure derived from the polyorganosiloxane represented by General Formula (1), and the effects obtained by introduction of such a modified structure, i.e., excellent performance on icy and snowy roads and wet performance can be achieved. Furthermore, excellent processability is considered to be obtained.

The method of reacting the polyorganosiloxane and the conjugated diene polymer chain having an active terminal is not particularly limited, and examples thereof include a method of mixing the polyorganosiloxanes and the

conjugated diene polymer chains having active terminals in a solvent in which they can each be dissolved. Examples of the solvent used in this case include those exemplified as the inert solvent used in the first step described above. In addition, in this case, a method of adding the polyorganosiloxane to a polymerization solution used for the polymerization to produce the conjugated diene polymer chain having an active terminal is convenient and preferable. In addition, in this case, the polyorganosiloxane is preferably dissolved in the inert solvent and added into the polymerization system, and the solution concentration thereof is preferably in the range from 1 to 50 mass%. The reaction temperature is not particularly limited, but is normally from 0 to 120°C, and the reaction time is not particularly limited, but is normally from 1 minute to 1 hour.

The timing of adding the polyorgnosiloxane to a solution containing the conjugated diene polymer chain having an active terminal is not particularly limited, but it is desirable to add the polyorgnosiloxane to this solution in a state where the polymerization reaction has not been completed and the solution containing the conjugated diene polymer chain having an active terminal contains a monomer as well. More specifically, the polyorgnosiloxane is desirably added to the solution containing the conjugated diene polymer chain having an active terminal while the solution is in a state where it contains preferably not less than 100 ppm, and more preferably from 300 to 50000 ppm, of the monomer. By adding the polyorganosiloxane in this way, it is possible to control the reaction well by suppressing side reactions between the conjugated diene polymer chain having an active terminal and impurities contained in the polymerization system.

In the second step, the polyorganosiloxane as a modifying agent is reacted with the active terminal of the conjugated diene polymer chain having an active terminal obtained in the first step described above. However, the active terminal of the conjugated diene polymer chain reacts with the silicon atom in the siloxane structure. Alternatively, a portion of the active terminal of the conjugated diene polymer chain reacts with the alkoxy group or epoxy group of the side chain of the polyorganosiloxane (such as an alkoxy group or epoxy group that forms the required $X^2$ in General Formula (1)). Then, according to the second step, the siloxane-modified structure is introduced into the conjugated diene polymer chain by such a reaction.

Specifically, when the active terminal of the conjugated diene polymer chain reacts with the silicon atom in the siloxane structure, the conjugated diene polymer chain forms a new bond between the silicon atom in the siloxane structure and the active terminal of the conjugated diene polymer chain, and the siloxane-modified structure is introduced at the terminal of the conjugated diene polymer chain, and it is thought that a group represented by $-O^-M^+$ (wherein M is an alkali metal atom, an alkaline earth metal atom, or a lanthanide-series metal atom) is formed as a reactive residue between an oxygen atom in the siloxane structure and a metal atom that forms the active terminal of the conjugated diene polymer chain.

Alternatively, when the active terminal of the conjugated diene polymer chain reacts with the epoxy group of the side chain of the polyorganosiloxane, the epoxy group opens, and a new bond is formed between the carbon atom of the portion where the epoxy group is opened and the active terminal of the conjugated diene polymer chain, and it is thought that the siloxane structure is introduced at the terminal of the conjugated diene polymer chain, and a group represented by $-O^-M^+$ is formed as a reactive residue between an oxygen atom in the epoxy group and a metal atom that forms the active terminal of the conjugated diene polymer chain. Alternatively, when the active terminal of the conjugated diene polymer chain reacts with the alkoxy group on the side chain of the polyorganosiloxane, the alkoxy group is eliminated, and the conjugated diene polymer chain forms a new bond between the silicon atom in the siloxane structure and the active terminal of the conjugated diene polymer chain, and a siloxane structure is introduced at the terminal of the conjugated diene polymer chain.

In particular, in the second step, the amount of the polyorganosiloxane used is 1 mol or greater in terms of number of repeating units of the siloxane structure (-Si-O-) relative to 1 mol of the polymerization initiator; of the conjugated diene polymer chains having an active terminal obtained in the first step, almost all the conjugated diene polymer chains can be introduced with a siloxane-modified structure. Accordingly, a state in which almost all the alkyl metal group as the active terminal of the conjugated diene polymer chain having the active terminal obtained in the first step, i.e., $-R^-M^+$, does not remain can be established, and instead, a group represented by $-O^-M^+$ as the reaction residue is formed. However, in the present invention, only a small amount (for example, 5 mass% or less) of a conjugated diene polymer chain having an unmodified active terminal that has not been modified by a siloxane may be included (i.e., only a small amount of an a conjugated diene polymer chain in which an alkyl metal group as the active terminal of the conjugated diene polymer chain having the active terminal obtained in the first step, i.e., $- R^-M^+$, remains may be included), and this case is not excluded.

Furthermore, in the second step, before the polyorganosiloxane represented by General Formula (1) is reacted with the conjugated diene polymer chain having an active terminal in the second step, a portion of the active terminal of the conjugated diene polymer chain having an active terminal may be added to the polymerization system, such as a commonly used coupling agent or modifying agent to perform coupling or modification, as long as the effects of an embodiment of the present invention are not inhibited.

Third Step

The third step is a step of reacting, with a compound represented by General Formula (2) below, the conjugated diene polymer chain reacted with the polyorganosiloxane in the second step.

[Chemical Formula 5]

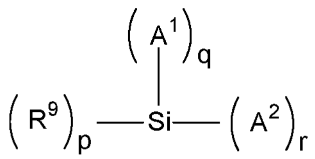

(2)

In General Formula (2), $R^9$ is a hydrocarbyl group; $A^1$ is a group capable of reacting with a reaction residue generated by reaction between the conjugated diene polymer chain having an active terminal and the polyorganosiloxane; $A^2$ is a group containing a nitrogen atom; p is an integer from 0 to 2; q is an integer from 1 to 3; r is an integer from 1 to 3; and p + q + r=4.

According to the present invention, in the second step described above, a state in which almost all of the alkyl metal group as the active terminal of the conjugated diene polymer chain having the active terminal obtained in the first step, i.e., $-R^-M^+$, does not remain is established, and instead, a group represented by $-O^-M^+$ is formed as the reaction residue by the reaction with the polyorganosiloxane represented by General Formula (1). So, according to the present invention, in the third step described above, the compound represented by General Formula (2) can be appropriately reacted with the group represented by $-O^-M^+$ (including those in which a group represented by $-O^-M^+$ is hydrolyzed and converted to a hydroxyl group) as such a reaction residue.

That is, according to the present invention, the compound represented by General Formula (2) reacts with the group represented by $-R^-M^+$, thereby making it possible to appropriately suppress the introduction of a modified structure according to the compound represented by General Formula (2) directly into the conjugated diene polymer chain; the modified structure according to the compound represented by General Formula (2) can be appropriately introduced into the conjugated diene polymer chain via a structure derived from the polyorganosiloxane represented by General Formula (1). So, excellent performance on icy and snowy roads and wet performance can be achieved. Furthermore, excellent processability is considered to be obtained.

However, it is sufficient that the conjugated diene polymer chain reacted with the polyorganosiloxane, which is used in the third step, may have undergone the second step described above. In addition to the conjugated diene polymer chains into which the siloxane-modified structure is introduced, only a small amount (for example, 5 mass% or less) of a conjugated diene polymer chain having an unmodified active terminal where the siloxane modified structure has not been introduced may remain (i.e., only a small amount of a conjugated diene polymer chain in which the alkyl metal group as the active terminal of the conjugated diene polymer chain having the active terminal obtained in the first step, that is, $-R^-M^+$, remains may be included). Furthermore, a conjugated diene polymer chain in which a portion of the $O^-M^+$ as a reaction residue is hydrolyzed and converted to a hydroxyl group formed as a result of introducing a siloxane-modified structure may be included.

In the compound represented by General Formula (2), $R^9$ in General Formula (2) is a hydrocarbyl group, and examples thereof include alkyl groups, cycloalkyl groups, alkenyl groups, aryl groups, and aralkyl groups. However, from the perspective of achieving superior effects of an embodiment of the present invention, an alkyl group having from 1 to 6 carbons is preferable. Furthermore, examples of the alkyl group having from 1 to 6 carbons include a methyl group, an ethyl group, an n-propyl group, an isopropyl group, a butyl group, a pentyl group, and a hexyl group. Among these, from the perspective of achieving superior effects of an embodiment of the present invention, a methyl group and an ethyl group is preferable.

In the compound represented by General Formula (2), $A^1$ in General Formula (2) is a group capable of reacting with a reactive residue (typically, a group represented by $-O^-M^+$) generated by a reaction between the conjugated diene polymer chain having an active terminal and the polyorganosiloxane, and is preferably a group represented by-$OR^{10}$ ($R^{10}$ is a hydrogen atom or a hydrocarbyl group). Examples of hydrocarbyl groups that can constitute $R^{10}$ include alkyl groups, cycloalkyl groups, alkenyl groups, aryl groups, and aralkyl groups, but from the perspective of reactivity with the reaction residue described above, an alkyl group having from 1 to 6 carbons is preferable. Furthermore, examples of the alkyl group having from 1 to 6 carbons include a methyl group, an ethyl group, an n-propyl group, an isopropyl group, a butyl group, a pentyl group, and a hexyl group. Among these, from the perspective of achieving superior effects of an embodiment of the present invention, a methyl group and an ethyl group is preferable.

In the compound represented by General Formula (2), the $A^2$ in General Formula (2) is a group containing a nitrogen atom, and is not particularly limited as long as it is a group containing a nitrogen atom, but is preferably an

organic group having a nitrogen atom, for example, 3-aminopropyl group, 4-aminobutyl group, 3-(2-aminoethylamino)propyl group, 2-dimethylaminoethyl group, 3-dimethylaminopropyl group, 3-diethylaminopropyl group, 3-dipropylaminopropyl group, 3-dibutylaminopropyl group, 3-phenylmethylaminopropyl group, 3-(4-methylpiperazinyl)propyl group, N,N-bis(trimethylsilyl)aminopropyl group, N,N-bis (triethylsilyl)aminopropyl group, and N,N',N'-tris(trimethylsilyl)-N-(2-aminoethyl)-3-aminopropyl group. Among these, from the perspective of achieving superior effects of an embodiment of the present invention, it is preferably a group containing a primary amino group having an active hydrogen atom and/or a secondary amino group having an active hydrogen atom, such as 3-aminopropyl group, 4-aminobutyl group, or 3-(2-aminoethylamino)propyl group. Note that "active hydrogen atom" refers to a hydrogen atom bonded to an atom other than a carbon atom, and the bonding energy is preferably lower than that of a carbon-hydrogen bond of the polymethylene chain.

In the compound represented by General Formula (2), p is an integer from 0 to 2, q is an integer from 1 to 3, r is an integer from 1 to 3, and p + q + r = 4. Preferably, p is an integer from 0 to 1 and q is an integer from 2 to 3, r is an integer from 1 to 2, and more preferably p = 0, q = 3, r = 1, in view of reactivity of the conjugated diene polymer chain having an active terminal with the reaction residue generated by a reaction of the conjugated diene polymer chain having an active terminal with the polyorganosiloxane. Note that when p is 2, two groups represented by $R^9$ contained in one molecule of the compound represented by General Formula (2) may be the same or different from each other. Similarly, when q is 2 or 3, a plurality of groups represented by $A^1$ contained in one molecule of the compound represented by General Formula (2) may be the same or different from each other. When r is 2 or 3, the plurality of groups represented by $A^2$ contained in one molecule of the compound represented by General Formula (2) may be the same or may be different from each other.

Specific examples of the compound represented by General Formula (2) are not particularly limited, but include, as compounds in which the $A^2$ in General Formula (2) is a group containing a primary amino group having an active hydrogen atom and/or a secondary amino group having an active hydrogen atom, compounds having a 3-aminopropyl group as $A^2$, such as 3-aminopropyldimethylmethoxysilane, 3-aminopropylmethyldimethoxysilane, 3-aminopropyltrimethoxysilane, 3-aminopropyldimethylethoxysilane, 3-aminopropylmethyldiethoxysilane, and 3-aminopropyltriethoxysilane; compounds having a 4-aminobutyl group as $A^2$, such as 4-aminobutyldimethylmethoxysilane, 4-aminobutylmethyldimethoxysilane, 4-aminobutyltrimethoxysilane, 4-aminobutyldimethylethoxysilane, 4-aminobutylmethyldiethoxysilane, and 4-aminobutyltriethoxysilane; and compounds having a 3-(2-aminoethylamino)propyl group as $A^2$, such as 3-(2-aminoethylamino)propyldimethylmethoxysilane, 3-(2-aminoethylamino)propylmethyldimethoxysilane, 3-(2-aminoethylamino)propyltrimethoxysilane, 3-(2-aminoethylamino)procyldimethylethoxysilane, 3-(2-aminoethylamino)propylmethyldiethoxysilane, and 3-(2-aminoethylamino)propyltriethoxysilane.

In addition, examples of compounds in which the $A^2$ in General Formula (2) is a group other than a group containing a primary amino group having an active hydrogen atom and/or a secondary amino group having an active hydrogen atom include:

compounds having a 3-dimethylaminopropyl group as $A^2$, such as 3-dimethylaminopropyltrimethoxysilane, 3-dimethylaminopropylmethyldimethoxysilane, 3-dimethylaminopropyldimethylmethoxysilane, 3-dimethylaminopropyltriethoxysilane, 3-dimethylaminopropylmethyldiethoxysilane, and 3-dimethylamino propyldimethylethoxysilane;
compounds having a 3-diethylaminopropyl group as $A^2$, such as 3-diethylaminopropyltrimethoxysilane, 3-diethylaminopropylmethyldimethoxysilane, 3-diethylaminopropyldimethylmethoxysilane, 3-diethylaminopropyltriethoxysilane, 3-diethylaminopropylmethyldiethoxysilane, and 3-diethylaminopropyldimethylethoxysilane;
compounds having a 3-dipropylaminopropyl group as $A^2$, such as 3-dipropylaminopropyltrimethoxysilane, 3-dipropylaminopropylmethyldimethoxysilane, 3-dipropylaminopropyldimethylmethoxysilane, 3-dipropylaminopropyltriethoxysilane, 3-dipropylaminopropylmethyldiethoxysilane, and 3-dipropylaminopropyldimethylethoxysilane;
compounds having a 3-dibutylaminopropyl group as $A^2$, such as 3-dibutylaminopropyltrimethoxysilane, 3-dibutylaminopropylmethyldimethoxysilane, 3-dibutylaminopropyldimethylmethoxysilane, 3-dibutylaminopropyltriethoxysilane, 3-dibutylaminopropylmethyldiethoxysilane, and 3-dibutylaminopropyldimethylethoxysilane;
compounds having a 3-phenylmethylaminopropyl group as $A^2$, such as 3-phenylmethylaminopropyltrimethoxysilane, 3-phenylmethylaminopropylmethyldimethoxysilane, 3-phenylmethylaminopropyldimethylmethoxysilane, 3-phenylmethylaminopropyltriethoxysilane, 3-phenylmethylaminopropylmethyldiethoxysilane, and 3-phenylmethylaminopropyldimethylethoxysilane;
compounds having a 3-(4-methylpiperazinyl)propyl group as $A^2$, such as 3-(4-methylpiperazinyl)propyltrimethoxysilane, 3-(4-methylpiperazinyl)propylmethyldimethoxysilane, 3-(4-methylpiperazinyl)propyldimethylmethoxysilane, 3-(4-)methylpiperazinyl)propyltriethoxysilane, 3-(4-methylpiperazinyl)propylmethyldiethoxysilane, 3-(4-methylpiperazinyl)propyldimethylethoxysilane;
compounds having N,N-bis(trimethylsilyl)aminopropyl group as $A^2$, such as N,N-bis(trimethylsilyl)aminopropyltrimethoxysilane, N,N-bis(trimethylsilyl)aminopropyltriethoxysilane, N,N-bis(trimethylsilyl)aminopropylmethyldimethoxysilane, and N,N-bis(trimethylsilyl)aminopropylmethyldiethoxysilane;

compounds having N,N-bis(triethylsilyl)aminopropyl group as $A^2$, such as N,N-bis(triethylsilyl)aminopropyltrimethoxysilane, N,N-bis(trimethylsilyl)aminopropyltriethoxysilane, N,N-bis(triethylsilyl)aminopropylmethyldimethoxysilane, and N,N-bis(triethylsilyl)aminopropylmethyldiethoxysilane; and

compounds having N,N',N'-tris(trimethylsilyl)-N-(2-aminoethyl)-3-aminopropyl group as $A^2$, such as N,N',N'-tris(trimethylsilyl)-N-(2-aminoethyl)-3-aminopropyltrimethoxysilane, N,N',N'-tris(trimethylsilyl)-N-(2-aminoethyl))-3-aminopropyltriethoxysilane, N,N',N'-tris(trimethylsilyl)-N-(2-aminoethyl)-3-aminopropylmethyldimethoxysilane, and N,N',N'-tris(trimethylsilyl)-N-(2-aminoethyl)-3-aminopropylmethyldiethoxysilane.

The used amount of the compound represented by General Formula (2) is not particularly limited, but from the perspective of achieving superior effects of an embodiment of the present invention, the amount is preferably from 0.1 to 5 mol, more preferably from 0.2 to 2 mol, and further preferably from 0.4 to 1.5 mol relative to 1 mol of the polymerization initiator used in the first step.

The timing of adding the compound represented by General Formula (2) to the solution containing the conjugated diene polymer chain is not particularly limited as long as the timing is after addition of the polyorganosiloxane represented by General Formula (1) in the second step described above. For example, as in the second step described above, it is possible to add the compound represented by General Formula (2) in a state where the polymerization reaction has not been completed and the solution containing the conjugated diene polymer chain contains a monomer as well. More specifically, the compound represented by General Formula (2) can be added to the solution containing the conjugated diene polymer chain while the solution is in a state where it contains not less than 100 ppm, and more preferably from 300 to 50000 ppm, of the monomer. By adding the compound represented by General Formula (2) in this way, it is possible to control the reaction well by suppressing side reactions between the conjugated diene polymer chain and impurities contained in the polymerization system. Alternatively, before or after the compound represented by General Formula (2) is added to the solution containing the conjugated diene polymer chain, water or an alcohol such as methanol is added to this solution, and thus a modification reaction may be performed in a state in which a group represented by $-O^{-}M^{+}$ as a reaction residue formed by the reaction with the polyorganosiloxane represented by General Formula (1) may be hydrolyzed and converted to hydroxyl groups. When the compound represented by General Formula (2) is added to the solution containing the conjugated diene polymer chain, the compound represented by General Formula (2) may be dissolved in the inert solvent and then added, or the compound may be added directly to the inert solvent without dissolving the compound. The reaction temperature and reaction time are the same as in the first step.

After the compound represented by General Formula (2) is reacted, a known polymerization quencher and the like may be added as necessary to deactivate the reaction system, and then anti-aging agents such as phenol-based stabilizers, phosphorus-based stabilizers, or sulfur-based stabilizers, crumbling agents, antiscale agents, and the like are added as desired. The polymerization solvent is separated from the polymerization solution by direct drying or steam stripping, to yield the conjugated diene rubber. Furthermore, before separating the polymerization solvent from the reaction solution, extender oil may be added to the polymerization solution to yield the conjugated diene rubber as an oil-extended rubber.

Examples of the extender oil used when recovering the conjugated diene rubber as an oil-extended rubber include paraffin-based, aromatic, and naphthene-based petroleum-based softeners, vegetable-based softeners, fatty acids, and the like. When a petroleum-based softener is used, the content of polycyclic aromatics extracted by the method of IP346 (test method of THE INSTITUTE PETROLEUM in the UK) is preferably less than 3%. When an extender oil is used, the used amount is preferably from 5 to 100 parts by mass, more preferably from 10 to 60 parts by mass, and further preferably from 20 to 50 parts by mass, per 100 parts by mass of the conjugated diene rubber.

As described above, the specific conjugated diene rubber is obtained as follows. In the second step described above, the polyorganosiloxane represented by General Formula (1) as a modifying agent is added in a proportion of 1 mol or greater in terms of number of repeating units of the siloxane structure (-Si-O-) in the polyorganosiloxane relative to 1 mol of the polymerization initiator relative to 1 mol of the polymerization initiator used in the first step to perform a reaction. Then, in the third step described above, the compound represented by General Formula (2) is used as a modifying agent to perform a reaction. Accordingly, the specific conjugated diene rubber includes a polymer in which a modified structure formed by a siloxane and a modified structure according to a compound represented by General Formula (2) is introduced at the terminal of the polymer chain. However, in addition to this type, only the siloxane-modified structure may be introduced at the polymer chain end. Furthermore, as long as the effects of an embodiment of the present invention are not inhibited, for example, only the modified structure according to the compound represented by General Formula (2) may be introduced, or none of the modified structures may be introduced, at the terminal of the polymer chain. In particular, in the present invention, from the perspective of achieving the effects of an embodiment of the present invention more appropriately, the proportion of the siloxane-modified structure and the modified structure according to the compound represented by General Formula (2) are introduced at the polymer chain end is preferably not less than 10 mass% or greater, and more preferably not less than 20 mass%. The upper limit is not particularly limited.

Monomer unit content

From the perspective of achieving superior effects of an embodiment of the present invention, the specific conjugated diene rubber contains: preferably from 50 to 100 mass%, and more preferably from 52 to 95 mass% of a conjugated diene monomer unit; and preferably from 0 to 50 mass% of an aromatic vinyl monomer unit.

Vinyl bond content

The vinyl bond content of the conjugated diene monomer unit in the specific conjugated diene rubber is preferably from 1 to 90 mass%, more preferably from 3 to 80 mass%, and particularly preferably from 5 to 70 mass%, from the perspective of achieving superior effects of an embodiment of the present invention.

Coupling rate

The coupling rate of the specific conjugated diene rubber is not particularly limited, but from the perspective of achieving superior effects of an embodiment of the present invention, the coupling rate is preferably not less than 10 mass%, more preferably not less than 20 mass%, particularly preferably not less than 40 mass%, and preferably not greater than 80 mass%, more preferably not greater than 75 mass%, and particularly preferably not greater than 70 mass%. The coupling ratio is a mass fraction of the polyorganosiloxane represented by General Formula (1) and the compound represented by General Formula (2) as well as the polymer molecule having a molecular weight of 1.8 times or greater the peak top molecular weight of the conjugated diene polymer chain having an active terminal before reaction with a coupling agent or any other modifying agent used as necessary, relative to the total amount of the finally obtained conjugated diene rubber. The molecular weight at this time is determined as polystyrene-equivalent molecular weight by gel permeation chromatography.

Molecular weight

The weight average molecular weight (Mw) of the specific conjugated diene rubber is the value measured by gel permeation chromatography in terms of polystyrene, and is preferably from 100000 to 3000000, more preferably from 150000 to 2000000, and particularly preferably from 200000 to 1500000. By setting the weight average molecular weight of the conjugated diene rubber to be within the range described above, blending of the silica into the conjugated diene rubber is facilitated, and the processability of the rubber composition can be enhanced, and the effects of an embodiment of the present invention are even better.

The molecular weight distribution expressed as the ratio (Mw/Mn) of the weight average molecular weight (Mw) to the number average molecular weight (Mn) of the specific conjugated diene rubber is preferably from 1.1 to 3.0, more preferably from 1.2 to 2.5, particularly preferably from 1.2 to 2.2 from the perspective of achieving superior effects of an embodiment of the present invention.

Viscosity

Furthermore, the Mooney viscosity ($ML_{1+4}$, 100°C) of the specific conjugated diene rubber is preferably from 20 to 100, more preferably from 30 to 90, particularly preferably from 35 to 80, from the perspective of achieving superior effects of an embodiment of the present invention. When the conjugated diene rubber is obtained as an oil-extended rubber, the Mooney viscosity of that oil-extended rubber is the same as the ranges above.

Content

The upper limit of the content of the specific conjugated diene rubber in the conjugated diene rubber is not particularly limited, but is 100 mass%. The content of the specific conjugated diene rubber in the conjugated diene rubber is preferably 40 mass% or greater, and more preferably from 50 to 100 mass% from the perspective of achieving superior effects of an embodiment of the present invention.

Other rubber components

The diene rubber may contain rubber components (other rubber components) besides the specific conjugated diene rubber.

Examples of such other rubber components include a conjugated diene rubber (y) other than the specific conjugated diene rubber.

Examples of the conjugated diene rubber (y) include natural rubber (NR), isoprene rubber (IR), butadiene rubber (BR), copolymers of aromatic vinyl and conjugated diene such as styrene-butadiene rubber (SBR), acrylonitrile-butadiene copolymer rubber (NBR), butyl rubber (IIR), halogenated butyl rubber (Br-IIR, Cl-IIR), and chloroprene rubber (CR). Among these, from the perspective of achieving superior effects of an embodiment of the present invention, a copolymer of aromatic vinyl and conjugated diene and butadiene rubber (BR) are preferable.

The content of the other rubber components in the conjugated diene rubber is not particularly limited, but from the perspective of achieving superior effects of an embodiment of the present invention, the content is preferably from 0 to 60 mass% and preferably from 0 to 50 mass%.

When the conjugated diene rubber contains the specific conjugated diene rubber and the conjugated diene rubber (y), an absolute value of a difference between a glass transition temperature of the specific conjugated diene rubber and a glass transition temperature of the conjugated diene rubber (y) is preferably 30°C or higher, and more preferably from 35 to 80°C, from the perspective of achieving superior effects of an embodiment of the present invention.

The above matter can be expressed by the following formula:

$$|\text{(Glass transition temperature of specific conjugated diene rubber)} - \text{(Glass transition temperature of conjugated diene rubber (y))}| \geq 30°C$$

Note that in the present invention, the glass transition temperatures of the conjugated diene rubbers (for example, the specific conjugated diene rubber and the conjugated diene rubber (y)) can be measured using a differential scanning calorimeter (DSC) at a temperature increase rate of 20°C/minute, and calculated by the midpoint method.

From the perspective of achieving superior effects of an embodiment of the present invention, a preferable aspect is combined use of a conjugated diene rubber having a glass transition temperature of not higher than -60°C and a conjugated diene rubber having a glass transition temperature of higher than - 60°C.

The conjugated diene rubber may contain a specific conjugated diene rubber as either or both of a conjugated diene rubber having a glass transition temperature of -60°C or lower and/or a conjugated diene rubber having a glass transition temperature of higher than -60°C.

When the conjugated diene rubber contains a specific conjugated diene rubber as the conjugated diene rubber having a glass transition temperature of - 60°C or lower, the conjugated diene rubber can further contain a conjugated diene rubber (y) as either or both of the conjugated diene rubber having a glass transition temperature of -60°C or lower and/or the conjugated diene rubber having a glass transition temperature of higher than -60°C. The same applies to a case where the conjugated diene rubber contains a specific conjugated diene rubber as the conjugated diene rubber having a glass transition temperature of higher than -60°C.

The glass transition temperature of the specific conjugated diene rubber can be -60°C or lower or higher than -60°C.

In the present invention, the specific conjugated diene rubber having a glass transition temperature of -60°C or lower may be referred to as a specific conjugated diene rubber (T1). Furthermore, the specific conjugated diene rubber having a glass transition temperature of -60°C or higher may be referred to as a specific conjugated diene rubber (T2).

From the perspective of achieving superior effects of an embodiment of the present invention, the conjugated diene rubber preferably contains at least the specific conjugated diene rubber (T2), and more preferably contains the specific conjugated diene rubber (T1) and the specific conjugated diene rubber (T2).

[2] Plasticizer

The composition according to an embodiment of the present invention contains a plasticizer containing a specific plasticizer.

In the present invention, the plasticizer is not particularly limited as long as it is a compound capable of plasticizing or softening rubber.

Note that, in the present invention, when the plasticizer is a conjugated diene rubber, the conjugated diene rubber as the plasticizer does not correspond to the "conjugated diene rubber (containing 30 mass% or greater of a specific conjugated diene rubber)" contained in the composition according to an embodiment of the present invention.

The plasticizer also contains a softener and a lubricant which can be added to the rubber composition, and an extender oil that can be used in rubber for the purpose of plasticizing rubber.

However, the plasticizer is free of wax.

A preferable aspect is one in which the plasticizer is liquid under room temperature conditions.

Examples of the plasticizer include naphthenic oils (low viscosity or high viscosity, particularly hydrogenated or others), polyolefin-based oils, naphthenic oils, paraffinic oils, Distillate Aromatic Extract (DAE) oils, Medium Extracted

Solvate (MES) oils, Treated Distillate Aromatic Extract (TDAE) oils, Residual Aromatic Extract (RAE) oils, Treated Residual Aromatic Extract (TRAE) oil, Safety Residual Aromatic Extract (SRAE) oils, mineral oils, vegetable oils, ether plasticizers, ester plasticizers such as phosphate plasticizers, and sulfonate plasticizers.

Specific Plasticizer

In the present invention, the specific plasticizer is a plasticizer having a glass transition temperature of -50°C or lower.

Glass transition temperature of specific plasticizer

Note that, in the present invention, the glass transition temperature of the plasticizer can be measured using a differential scanning calorimeter (DSC) at a temperature increase rate of 20°C/minute, and calculated by the midpoint method.

From the perspective of achieving superior effects of an embodiment of the present invention, the glass transition temperature of the specific plasticizer is preferably -60°C or lower.

The lower limit of the glass transition temperature of the specific plasticizer can be, for example, -150°C or higher.

The glass transition temperature of the specific plasticizer is preferably - 70°C or lower and preferably -80°C or lower, from the perspective of achieving superior performance on icy and snowy roads and excellent plasticizing effect.

From the perspective of achieving superior wet performance and performance on icy and snowy roads, the glass transition temperature of the specific plasticizer is preferably -120°C or higher and preferably -105°C or higher.

Note that a suitable range of the glass transition temperature of the specific plasticizer refers to the glass transition temperature of each of the plasticizers used as the specific plasticizer.

From the perspective of achieving superior effects of an embodiment of the present invention and also achieving excellent wet performance and icy and snowy roads, a preferable aspect is combined use of a plasticizer having a glass transition temperature of not higher than -60°C and a plasticizer having a glass transition temperature not higher than -50°C and higher than -60°C.

Examples of the specific plasticizer include TDAE oils (treated distillate aromatic extract oils), paraffin oils (paraffinic oils), liquid polybutadiene, and phosphoric acid ester (phosphate).

From the perspective of achieving superior effects of an embodiment of the present invention, the specific plasticizer preferably contains at least one type selected from the group consisting of TDAE oils, paraffin oil, liquid polybutadiene, and phosphoric acid ester; more preferably contains at least one type of plasticizer (p1) selected from the group consisting of paraffin oil, liquid polybutadiene, and phosphoric acid ester; further preferably is liquid polybutadiene.

Additionally, from the perspective of achieving superior effects of an embodiment of the present invention and also achieving excellent wet performance and icy and snowy roads, a preferable aspect is combined use of TDAE oil and at least one type of plasticizer (p1) selected from the group consisting of paraffin oil, liquid polybutadiene, and phosphoric acid ester.

TDAE oil

The TDAE oil (treated distillate aromatic extract oil) is not particularly limited. Examples of the TDAE oil include known TDAE oils.

Paraffin oil

The paraffin oil as the specific plasticizer is not particularly limited as long as it is an oil containing a saturated hydrocarbon compound. Specific examples include oils obtained by hydrogenating a petroleum fraction or residual oil and purifying the resultant product, or obtained by degradation thereof.

Liquid polybutadiene

The liquid polybutadiene as the specific plasticizer is not particularly limited as long as it is a polymer which is liquid under room temperature conditions and has a repeating unit formed by butadiene.

A preferable aspect is one in which the liquid polybutadiene is a homopolymer of butadiene.

Note that the liquid polybutadiene does not correspond to the conjugated diene rubber described above.

From the perspective of achieving superior effects of an embodiment of the present invention, the weight average molecular weight of the liquid polybutadiene is preferably from 2000 to 100000, and more preferably from 3000

to 50000.

The weight average molecular weight (Mw) of the liquid polybutadiene is a value in terms of standard polystyrene based on the value measured by gel permeation chromatography (GPC).

Phosphoric acid ester

The phosphoric acid ester as the specific plasticizer is not particularly limited as long as it is an ester of phosphoric acid ($H_3PO_5$). The phosphoric acid ester may be a monoester, a diester, or a triester.

In the phosphoric acid ester described above, the hydrocarbon group constituting the ester is not particularly limited. Examples of the hydrocarbon group include aliphatic hydrocarbon groups (linear, branched, or cyclic), aromatic hydrocarbon groups, and combinations thereof.

The hydrocarbon group may have a hetero atom such as an oxygen atom, a nitrogen atom, or a sulfur atom; or a halogen such as a chlorine atom.

Examples of the phosphoric acid ester include trimethyl phosphate, triethyl phosphate, tributyl phosphate, trioctyl phosphate (in particular, tri(2-ethylhexyl) phosphate), tris (2-butoxyethyl) phosphate, tris (2-chloroethyl) phosphate, and 2-ethylhexyldiphenyl phosphate.

The plasticizer can further contain a plasticizer having a glass transition temperature of higher than -50°C.

The plasticizer having a glass transition temperature of higher than - 50°C is not particularly limited.

Examples of the plasticizer having a glass transition temperature of higher than -50°C include liquid polystyrene butadiene.

Content of specific plasticizer

In the present invention, the content of the specific plasticizer is 5 parts by mass or greater per 100 parts by mass of the conjugated diene rubber.

The content of the specific plasticizer is not particularly limited, but from the perspective of achieving superior effects of an embodiment of the present invention, the content is preferably from 5 to 70 parts by mass and more preferably from 8 to 60 parts by mass, per 100 parts by mass of the conjugated diene rubber described above.

From the perspective of achieving superior effects of an embodiment of the present invention, the content of the specific plasticizer is preferably from 5 to 100 mass% relative to the total amount of the plasticizer.

Average glass transition temperature of conjugated diene rubber and plasticizer

In the present invention, the average glass transition temperature of the conjugated diene rubber and the plasticizer is lower than -50°C (less than - 50°C).

The average glass transition temperature of the conjugated diene rubber and the plasticizer refers to an average of the glass transition temperature of the conjugated diene rubber and the glass transition temperature of the plasticizer.

From the perspective of achieving superior effects of an embodiment of the present invention, the predetermined glass transition temperature is preferably from -70 to -51°C, and more preferably from -65 to -52°C.

The predetermined average glass transition temperature is obtained by multiplying the glass transition temperature (Tg) of each of the conjugated diene rubbers (e.g., specific conjugated diene rubber and conjugated diene rubber (y)) or each of the plasticizers (e.g., the specific plasticizers described above) by the mass% of each of the components relative to the total of the conjugated diene rubbers and the plasticizers, and adding the products together.

[3] Silica

The silica contained in the composition according to an embodiment of the present invention is not particularly limited, and any known silica can be used. Specific examples of the silica include wet silica, dry silica, fumed silica, and diatomaceous earth.

From the perspective of achieving superior effects of an embodiment of the present invention, the CTAB adsorption specific surface area of the specific silica is preferably from 100 to 250 $m^2/g$, and more preferably from 120 to 220 $m^2/g$.

Note that the CTAB adsorption specific surface area is a value of the amount of CTAB adsorbed to the surface of silica measured in accordance with JIS K6217-3:2001 "Part 3: Determination of specific surface area - CTAB adsorption method".

In the composition according to an embodiment of the present invention, the content of the silica is 30 parts by mass or greater per 100 parts by mass of the conjugated diene rubber described above. Among these, from the perspective of achieving superior effects of an embodiment of the present invention, the content is preferably 50 parts by

mass or greater and more preferably 100 parts by mass or greater.

The upper limit of the content of the silica is not particularly limited, but from the perspective of achieving superior effects of an embodiment of the present invention, the upper limit is preferably 300 parts by mass or less, and more preferably 200 parts by mass or less, per 100 parts by mass of the conjugated diene rubber described above.

[4] Silane coupling agent

The silane coupling agent contained in the composition of an embodiment of the present invention is not particularly limited as long as the silane coupling agent is a silane compound having a hydrolyzable silyl group and an organic functional group.

The hydrolyzable group is not particularly limited; however, examples thereof include alkoxy groups, a phenoxy group, a carboxyl group, and alkenyloxy groups. Among these, from the perspective of achieving superior effects of an embodiment of the present invention, the hydrolyzable group is preferably an alkoxy group. When the hydrolyzable group is an alkoxy group, the number of carbons of the alkoxy group is preferably from 1 to 16, and more preferably from 1 to 4, from the perspective of achieving superior effects of an embodiment of the present invention. Examples of the alkoxy group having from 1 to 4 carbons include a methoxy group, an ethoxy group, and a propoxy group.

The organic functional group is not particularly limited, but is preferably a group that can form a chemical bond with an organic compound, and examples thereof include an epoxy group, a vinyl group, an acryloyl group, a methacryloyl group, an amino group, a sulfide group, a mercapto group, and a block mercapto group (protecting mercapto group) (for example, octanoylthio groups). Among these, from the perspective of achieving superior effects of an embodiment of the present invention, a sulfide group (particularly, a disulfide group or a tetrasulfide group), a mercapto group, and a block mercapto group are preferable.

Specific examples of the silane coupling agent include: bis-[3-(triethoxysilyl)-propyl]tetrasulfide, bis-[3-(trimethoxysilyl)-propyl]tetrasulfide, bis-[3-(triethoxysilyl)-propyl]disulfide, mercaptopropyl-trimethoxysilane, mercaptopropyl-triethoxysilane, 3-trimethoxysilylpropyl-N,N-dimethylthiocarbamoyl-tetrasulfide, trimethoxysilylpropyl-mercaptobenzothiazole tetrasulfide, triethoxysilylpropyl-methacrylate-monosulfide, dimethoxymethylsilylpropyl-N,N-dimethylthiocarbamoyl-tetrasulfide, and 3-octanoylthio-1-propyltriethoxysilane. One of these can be used alone, or a combination of two or more can be used.

In the composition according to an embodiment of the present invention, the content of the silane coupling agent is from 3 to 30 mass% with respect to the content of the silica described above. Among these, from the perspective of achieving superior effects of an embodiment of the present invention, the content is preferably from 5 to 20 mass%.

Furthermore, in the composition according to an embodiment of the present invention, from the perspective of achieving superior effects of an embodiment of the present invention, the content of the silane coupling agent is preferably from 1 to 50 parts by mass, more preferably from 2 to 45 parts by mass, and further preferably from 4 to 40 parts by mass, per 100 parts by mass of the conjugated diene rubber.

[5] Optional component

The composition according to an embodiment of the present invention may contain a component (optional component) other than the components described above, as necessary.

Examples of the optional component include various additives that are typically used in rubber compositions, such as fillers other than silica (e.g., carbon black), terpene resins (preferably aromatic-modified terpene resins), thermally expandable microcapsules, zinc oxide (flower of zinc), stearic acid, anti-aging agents, waxes, processing aids, thermosetting resins, vulcanizing agents (e.g., sulfur), and vulcanization accelerators.

Carbon black

From the perspective of achieving superior effects of an embodiment of the present invention, the composition according to an embodiment of the present invention preferably contains carbon black.

The carbon black is not particularly limited, and for example, carbon black of various grades, such as SAF-HS, SAF, ISAF-HS, ISAF, ISAF-LS, IISAF-HS, HAF-HS, HAF, HAF-LS, FEF, GPF, and SRF, can be used.

The nitrogen adsorption specific surface area ($N_2SA$) of the carbon black is not particularly limited, but is preferably from 50 to 200 $m^2/g$ and more preferably from 70 to 150 $m^2/g$, from the perspective of achieving superior effects of an embodiment of the present invention.

Note that the nitrogen adsorption specific surface area ($N_2SA$) is a value of the amount of nitrogen adsorbed to the surface of carbon black, measured in accordance with JIS K6217-2:2001 "Part 2: Determination of specific surface area - Nitrogen adsorption methods - Single-point procedures".

In the composition according to an embodiment of the present invention, the content of the carbon black is not

particularly limited, but from the perspective of achieving superior effects of an embodiment of the present invention, the content is preferably from 1 to 100 parts by mass and more preferably from 2 to 10 parts by mass, per 100 parts by mass of the diene rubber described above.

Specific alkyltriethoxysilane

The composition according to an embodiment of the present invention preferably contains an alkyltriethoxysilane represented by General Formula (I) below (hereinafter, also referred to as "specific alkyltriethoxysilane"), from the perspective of achieving superior effects of an embodiment of the present invention.

[Chemical Formula 6]

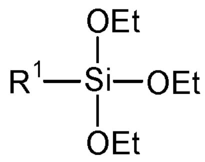

(I)

In General Formula (I) above, $R^1$ represents an alkyl group having from 7 to 20 carbons. Et represents an ethyl group.

Specific examples of the alkyl group having from 7 to 20 carbons include a heptyl group, an octyl group, a nonyl group, a decyl group, an undecyl group, and a dodecyl group. Among these, from the perspective of achieving superior effects of an embodiment of the present invention, the alkyl group having from 7 to 20 carbons is preferably an octyl group and a nonyl group.

In the composition according to an embodiment of the present invention, the content of the specific alkyltriethoxysilane is not particularly limited, but from the perspective of achieving superior effects of an embodiment of the present invention, the content of the silica described above is preferably from 2.0 to 10.0 mass%.

Preparation method of rubber composition for tire tread for winter

The method of producing the composition according to an embodiment of the present invention is not particularly limited, and specific examples thereof include a method whereby each of the above-mentioned components is kneaded using a publicly known method and device (e.g., Banbury mixer, kneader, and roll). When the composition according to an embodiment of the present invention contains a sulfur or a vulcanization accelerator, the components other than the sulfur and the vulcanization accelerator are preferably blended first at a high temperature (preferably from 100 to 160°C) and then cooled before the sulfur or the vulcanization accelerator is blended.

In addition, the composition according to an embodiment of the present invention can be vulcanized or crosslinked under known vulcanizing or crosslinking conditions.

[II] Pneumatic tire for winter

The pneumatic tire for winter according to an embodiment of the present invention is a pneumatic tire for winter produced using the composition according to an embodiment of the present invention described above. In particular, the pneumatic tire is preferably a pneumatic tire in which the composition according to an embodiment of the present invention is used (provided) in the tire tread (cap tread).

FIG. 1 is a partial cross-sectional schematic view of a pneumatic tire that represents a pneumatic tire for winter according to an embodiment of the present invention, but the pneumatic tire for winter according to an embodiment of the present invention is not limited to the embodiment illustrated in FIG. 1.

In FIG. 1, the reference sign 1 denotes a bead portion, the reference sign 2 denotes a sidewall portion, and the reference sign 3 denotes a tire tread portion.

In addition, a carcass layer 4, in which a fiber cord is embedded, is mounted between a left-right pair of bead portions 1, and ends of the carcass layer 4 are wound by being folded around bead cores 5 and a bead filler 6 from an inner side to an outer side of the tire.

In the tire tread portion 3, a belt layer 7 is provided along the entire circumference of the tire on the outer side of the carcass layer 4.

Additionally, a rim cushion 8 is provided in a portion of each of the bead portions 1 that is in contact with a rim.

Note that the tire tread portion 3 is formed from the composition according to an embodiment of the present invention described above.

The pneumatic tire for winter according to an embodiment of the present invention can be produced, for example, in accordance with a known method. In addition, as a gas with which the pneumatic tire for winter is filled, an inert gas such as nitrogen, argon, helium, or the like can be used in addition to a normal air or air whose oxygen partial pressure is adjusted.

## Example

An embodiment of the present invention is described in further detail below by using examples. However, an embodiment of the present invention is not limited to these examples.

### Production of specific conjugated diene rubber and comparative conjugated diene rubber

Specific conjugated diene rubbers 1 to 4 and comparative conjugated diene rubbers 1 to 4 were produced as follows.

Here, the specific conjugated diene rubbers 1 to 4 are conjugated diene rubbers produced by the method for producing a conjugated diene rubber including the first to third steps described above, and correspond to the specific conjugated diene rubber described above. Furthermore, the specific conjugated diene rubbers 2 and 3 are provided with steps A and B described above in the first step, and the specific conjugated diene rubbers each have a PI block.

On the other hand, the comparative conjugated diene rubber 1 does not correspond to the specific conjugated diene rubber described above because the amount of the polyorganosiloxane added does not satisfy the second step described above. The comparative conjugated diene rubbers 2 to 4 are conjugated diene rubbers produced by the method for producing a conjugated diene rubber including the first and second steps (not including the third step described above), and do not correspond to the specific conjugated diene rubber described above.

### Specific conjugated diene rubber 1

An autoclave with a stirrer was charged with 800 g of cyclohexane, 1.42 mmol of tetramethylethylenediamine, 87.6 g of 1,3-butadiene and 32.4 g of styrene in a nitrogen atmosphere. Then, 0.79 mmol of n-butyllithium was added, and polymerization of the mixture was initiated at 60°C. The polymerization reaction was continued for 60 minutes, and after it was confirmed that the polymerization conversion rate had reached from 95 to 100%, the polyorganosiloxane represented by Formula (11) below was added in an amount of 0.26 g (equivalent to 1.1 times the number of moles of n-butyllithium used in terms of number of repeating units of the siloxane structure (-Si-O-) in the polyorganosiloxane) in the state of a xylene solution having a 40 mass% concentration, and the mixture was reacted for 30 minutes. Then, 3-(2-aminoethylamino)propyltrimethoxysilane was added in an amount of 0.79 mmol (equivalent to 1.0 time the number of moles of n-butyllithium used) and stirred for 10 minutes. After that, methanol in an amount equivalent to twice the number of moles of n-butyllithium used was added as a polymerization quencher, and a solution containing a conjugated diene rubber was obtained. To this solution, Irganox 1520L (available from Ciba Specialty Chemicals Corp.) was added as an anti-aging agent in an amount of 0.15 parts per 100 parts by mass of conjugated diene rubber, the solvent was removed by steam stripping, and the resulting substance was vacuum-dried for 24 hours at 60°C to produce solid conjugated diene rubber. The obtained conjugated diene rubber is designated as a specific conjugated diene rubber 1. The weight average molecular weight (Mw) of the specific conjugated diene rubber 1 was 467,000, the coupling rate was 54.4%, the styrene monomer unit content was 26.9 mass%, and the vinyl bond content was 58.5 mass%.

[Chemical Formula 7]

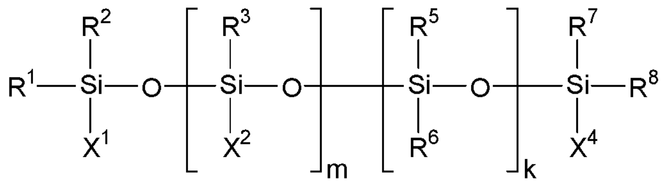

(11)

In Formula (11) above, each of $X^1$, $X^4$, $R^1$ to $R^3$, and $R^5$ to $R^8$ is a methyl group. In Formula (11) above, m is 80, and k is 120. In Formula (11) above, $X^2$ is a group represented by Formula (12) below (wherein * indicates a bond position).

[Chemical Formula 8]

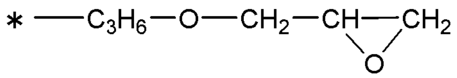

(1 2)

Specific conjugated diene rubber 2

In a nitrogen-purged 100 mL ampoule bottle, 50.0 g of cyclohexane and 0.66 mmol of tetramethylethylenediamine were added, and then 6.6 mmol of n-butyllithium was further added. Then, 11.61 g of isoprene and 0.87 g of styrene were slowly added, and the mixture was reacted for 120 minutes in the ampoule bottle at 50°C to yield a polymer block (A) having an active terminal. The weight average molecular weight (Mw) of this polymer block (A) was 3500, the molecular weight distribution (Mw/Mn) was 1.10, the styrene monomer unit content was 7.0 mass%, the isoprene monomer unit content was 93.0 mass%, and the vinyl bond content was 7.7 mass%.

An autoclave with a stirrer was charged with 4000 g of cyclohexane, 11.1 mmol of tetramethylethylenediamine, 393.0 g of 1,3-butadiene, and 207.0 g of styrene in a nitrogen atmosphere. Then, the polymer block (A) having an active terminal obtained above was added in total, and polymerization was initiated at 40°C. Ten minutes after polymerization was initiated, 337.0 g of 1,3-butadiene and 63.0 g of styrene were continuously added over the course of 40 minutes. The maximum temperature during the polymerization reaction was 60°C. After continuous addition was completed, the polymerization reaction was continued for another 20 minutes, and after it was confirmed that the polymerization conversion rate had reached from 95 to 100%, the polyorganosiloxane represented by Formula (11) above was added in an amount of 2.13 g (equivalent to 1.1 times the number of moles of n-butyllithium used, in terms of number of repeating units of the siloxane structure (-Si-O-) in the polyorganosiloxane) in the state of a xylene solution having a 40 mass% concentration, and the mixture was reacted for 30 minutes. Then, 3-(2-aminoethylamino)propyltrimethoxysilane was added in an amount of 6.6 mmol (equivalent to 1.0 time the number of moles of n-butyllithium used) and stirred for 10 minutes. After that, methanol in an amount equivalent to twice the number of moles of n-butyllithium used was added as a polymerization quencher, and a solution containing a conjugated diene rubber was obtained. To this solution, Irganox 1520L (available from Ciba Specialty Chemicals Corp.) was added as an anti-aging agent in an amount of 0.15 parts per 100 parts by mass of conjugated diene rubber, the solvent was removed by steam stripping, and the resulting substance was vacuum-dried for 24 hours at 60°C to produce solid conjugated diene rubber. The obtained conjugated diene rubber is designated as a specific conjugated diene rubber 2. The weight average molecular weight (Mw) of the specific conjugated diene rubber 2 was 488000, the coupling rate was 60.2%, the styrene monomer unit content was 26.6 mass%, and the vinyl bond content was 60.4 mass%.

Specific conjugated diene rubber 3

In a nitrogen-purged 800-mL ampoule bottle, 70.0 g of cyclohexane and 0.77 mmol of tetramethylethylenediamine were added, and then 7.69 mmol of n-butyllithium was further added. Then, 27.9 g of isoprene and 2.1 g of styrene were slowly added, and the mixture was reacted for 120 minutes in the ampoule bottle at 50°C to yield a polymer block (A) having an active terminal. The weight average molecular weight (Mw) of this polymer block (A) was 6500, the molecular weight distribution (Mw/Mn) was 1.10, the styrene monomer unit content was 7.0 mass%, the isoprene monomer unit content was 93.0 mass%, and the vinyl bond content was 7.7 mass%.

An autoclave with a stirrer was charged with 4000 g of cyclohexane, 2.69 mmol of tetramethylethylenediamine, 474 g of 1,3-butadiene, and 126 g of styrene in a nitrogen atmosphere. Then, the polymer block (A) having an active terminal obtained above was added in total, and polymerization was initiated at 50°C. Ten minutes after polymerization was initiated, 376 g of 1,3-butadiene and 24 g of styrene were continuously added over the course of 60 minutes. The maximum temperature during the polymerization reaction was 75°C. After continuous addition was completed, the polymerization reaction was continued for another 10 minutes, and after it was confirmed that the polymerization conversion rate had reached from 95 to 100%, the polyorganosiloxane represented by Formula (11) above was added in an amount of 2.44 g (equivalent to 1.1 times the number of moles of n-butyllithium used, in terms of number of repeating units of the siloxane structure (-Si-O-) in the polyorganosiloxane) in the state of a xylene solution having a 40 mass% concentration, and the mixture was reacted for 30 minutes. Then, 3-(2-aminoethylamino)propyltrimethoxysilane was added in an amount of 7.69 mmol (equivalent to 1.0 time the number of moles of n-butyllithium used) and stirred for 10 minutes. After that, methanol in an amount equivalent to twice the number of moles of n-butyllithium used was added as a polymerization quencher, and a solution containing a conjugated diene rubber was obtained. To this solution, Irganox 1520L (available from Ciba Specialty Chemicals Corp.) was added as an anti-aging agent in an amount of 0.15 parts per 100 parts by mass of conjugated diene rubber, the solvent was removed by steam stripping, and the resulting substance was vacuum-dried for 24 hours at 60°C to produce solid conjugated diene rubber. The obtained conjugated

diene rubber is designated as a specific conjugated diene rubber 3. The weight average molecular weight (Mw) of the specific conjugated diene rubber 3 was 460,000, the coupling rate was 58.0%, the styrene monomer unit content was 15.0 mass%, and the vinyl bond content was 30.5 mass%.

Specific conjugated diene rubber 4

An autoclave with a stirrer was charged with 800 g of cyclohexane and 120 g of 1,3-butadiene in a nitrogen atmosphere. Then, 1.00 mmol of n-butyllithium was added, and polymerization of the mixture was initiated at 80°C. The polymerization reaction was continued for 90 minutes, and it was confirmed that the polymerization conversion rate had reached from 95% to 100%. Then, the polyorganosiloxane represented by Formula (11) above was added in an amount of 0.32 g (equivalent to 1.1 times the number of moles of n-butyllithium used, in terms of number of repeating units of the siloxane structure (-Si-O-) in the polyorganosiloxane), and the mixture was reacted for 30 minutes. Then, 3-(2-aminoethylamino)propyltrimethoxysilane 1.00 mmol (equivalent to 1.0 time the number of moles of n-butyllithium used) was then added and reacted for 10 minutes. After that, methanol in an amount equivalent to twice the number of moles of n-butyllithium used was added as a polymerization quencher, and a solution containing a conjugated diene rubber was obtained. To this solution, Irganox 1520L (available from BASF) was added as an anti-aging agent in an amount of 0.15 parts per 100 parts of the conjugated diene rubber, the solvent was removed by steam stripping, and the resulting substance was vacuum-dried for 24 hours at 60°C to produce a solid conjugated diene rubber. The obtained conjugated diene rubber is designated as a specific conjugated diene rubber 4. The weight average molecular weight (Mw) of the specific conjugated diene rubber 4 was 485,000, the coupling rate was 55.5%, and the vinyl bond content was 9.8 mass%.

Comparative conjugated diene rubber 1

An autoclave with a stirrer was charged with 800 g of cyclohexane, 1.42 mmol of tetramethylethylenediamine, 87.6 g of 1,3-butadiene and 32.4 g of styrene in a nitrogen atmosphere. Then, 0.79 mmol of n-butyllithium was added, and polymerization of the mixture was initiated at 60°C. The polymerization reaction was continued for another 60 minutes, and after it was confirmed that the polymerization conversion rate had reached from 95 to 100%, the polyorganosiloxane represented by Formula (11) above was added in an amount of 0.16 g (equivalent to 0.7 times the number of moles of n-butyllithium used in terms of number of repeating units of the siloxane structure (-Si-O-) in the polyorganosiloxane) in the state of a xylene solution having a 40 mass% concentration, and the mixture was reacted for 30 minutes. Then, 3-(2-aminoethylamino)propyltrimethoxysilane was added in an amount of 0.79 mmol (equivalent to 1.0 time the number of moles of n-butyllithium used) and stirred for 10 minutes. After that, methanol in an amount equivalent to twice the number of moles of n-butyllithium used was added as a polymerization quencher, and a solution containing a conjugated diene rubber was obtained. To this solution, Irganox 1520L (available from Ciba Specialty Chemicals Corp.) was added as an anti-aging agent in an amount of 0.15 parts per 100 parts by mass of conjugated diene rubber, the solvent was removed by steam stripping, and the resulting substance was vacuum-dried for 24 hours at 60°C to produce solid conjugated diene rubber. The obtained conjugated diene rubber is designated as a comparative conjugated diene rubber 1. The weight average molecular weight (Mw) of the comparative conjugated diene rubber 1 was 383000, the coupling rate was 34.4%, the styrene monomer unit content was 26.6 mass%, and the vinyl bond content was 58.5 mass%.

Comparative conjugated diene rubber 2

An autoclave with a stirrer was charged with 800 g of cyclohexane, 1.42 mmol of tetramethylethylenediamine, 87.6 g of 1,3-butadiene and 32.4 g of styrene in a nitrogen atmosphere. Then, 0.79 mmol of n-butyllithium was added, and polymerization of the mixture was initiated at 60°C. The polymerization reaction was continued for another 60 minutes, and after it was confirmed that the polymerization conversion rate had reached from 95 to 100%, the polyorganosiloxane represented by Formula (11) above was added in an amount of 0.26 g (equivalent to 1.1 times the number of moles of n-butyllithium used in terms of number of repeating units of the siloxane structure (-Si-O-) in the polyorganosiloxane) in the state of a xylene solution having a 40 mass% concentration, and the mixture was reacted for 30 minutes. After that, methanol in an amount equivalent to twice the number of moles of n-butyllithium used was added as a polymerization quencher, and a solution containing a conjugated diene rubber was obtained. To this solution, Irganox 1520L (available from Ciba Specialty Chemicals Corp.) was added as an anti-aging agent in an amount of 0.15 parts per 100 parts by mass of conjugated diene rubber, the solvent was removed by steam stripping, and the resulting substance was vacuum-dried for 24 hours at 60°C to produce solid conjugated diene rubber. The obtained conjugated diene rubber is designated as a comparative conjugated diene rubber 2. The weight average molecular weight (Mw) of the comparative conjugated diene rubber 2 was 460000, the coupling rate was 52.5%, the aromatic vinyl monomer (styrene monomer) unit content was 27.6 mass%, the vinyl bond content was 58.8 mass%, the glass transition temperature (Tg) was -22°C, and the molecular weight distribution (Mw/Mn) was 1.4.

Comparative conjugated diene rubber 3

A solid conjugated diene rubber was obtained by performing the same procedures as in the method for producing the specific conjugated diene rubber 3 except that 7.69 mmol of 3-(2-aminoethylamino)propyltrimethoxysilane was not added. The obtained conjugated diene rubber is designated as a comparative conjugated diene rubber 3. The weight average molecular weight (Mw) of the conjugated diene rubber 3 was 450000, the coupling rate was 56.8%, the styrene monomer unit content was 15.0 mass%, and the vinyl bond content was 30.0 mass%.

Comparative conjugated diene rubber 4

A solid conjugated diene rubber was obtained by performing the same procedures as in the method for producing the specific conjugated diene rubber 4 except that 1.00 mmol of 3-(2-aminoethylamino)propyltrimethoxysilane was not added. The obtained conjugated diene rubber is designated as a comparative conjugated diene rubber 4. The weight average molecular weight of the conjugated diene rubber 4 was 460000, the coupling rate was 54.0%, and the vinyl bond content was 9.1 mass%.

Preparation of rubber composition for tire tread

The components shown in Table 1 below were blended at proportions (parts by mass) shown in the table.

Specifically, a master batch was obtained by first heating, to a temperature near 140°C, the components shown in Table 1, excluding the sulfur and the vulcanization accelerator, for 5 minutes in a 1.7-L closed-type Banbury mixer, and then discharging the mixture and cooling it to room temperature. Further, sulfur and a vulcanization accelerator were mixed into the resulting master batch using the Banbury mixer described above so as to obtain a rubber composition for a tire tread.

In Table 1, the amount (parts by mass) of each of the rubber components is a net amount of rubber.

Evaluation

The following evaluations were performed for the obtained rubber composition for a tire tread.

Preparation of vulcanized rubber sheet

A vulcanized rubber sheet was prepared by press-vulcanizing the obtained (unvulcanized) rubber composition for a tire tread for 40 minutes at 160°C in a mold (15 cm x 15 cm x 0.2 cm).

Performance on icy and snowy road

The storage elastic modulus E' (-10°C) was measured for the obtained vulcanized rubber sheet, with an elongation deformation distortion of 10% $\pm$ 0.5%, an oscillation frequency of 20 Hz, and a temperature of -10°C using a viscoelastic spectrometer (available from Toyo Seiki Seisaku-sho, Ltd.), in accordance with JIS K6394:2007.

The results are shown in Table 1. The results are expressed as index values with Comparative Example 1 being assigned the index value of 100. A smaller index value indicates superior performance on icy and snowy roads (Snow performance). In practical use, the index is preferably less than 100.

Wet performance

The value of tan $\delta$ (0°C) was measured for the obtained vulcanized rubber sheet with an elongation deformation distortion of 10% +/- 2%, an oscillation frequency of 20 Hz, and a temperature of 0°C using a viscoelastic spectrometer (available from Toyo Seiki Seisaku-sho, Ltd.) in accordance with JIS K6394:2007.

The results are shown in Table 1. The results are expressed as index values with Comparative Example 1 being assigned the index value of 100. A larger index value indicates superior wet performance (wet grip performance). In practical use, the index is preferably 101 or greater.

[Table 1-1]

| Table 1 | Tg (°C) | Comparative Example | | | | | | |
|---|---|---|---|---|---|---|---|---|
| | | 1 | 2 | 3 | 4 | 5 | 6 | 7 |
| Specific conjugated diene rubber 1 | -22 | | | | | | | 60 |
| Specific conjugated diene rubber 2 | -22 | 70 | | | | | | |
| Comparative conjugated diene rubber 1 | -22 | | 60 | | 40 | 55 | 60 | |
| Comparative conjugated diene rubber 2 | -22 | | | 60 | | | | |
| Specific conjugated diene rubber 3 | -63 | | | | | 10 | | |
| Comparative conjugated diene rubber 3 | -63 | | | | 50 | | | |
| Specific conjugated diene rubber 4 | -93 | | | | 10 | | | |
| Comparative conjugated diene rubber 4 | -93 | 30 | 40 | 40 | | 35 | 40 | 40 |
| Silica | | 90 | 90 | 90 | 90 | 90 | 90 | 20 |
| Carbon black | | 20 | 20 | 20 | 20 | 20 | 20 | 90 |
| Silane coupling agent | | 7.2 | 7.2 | 7.2 | 7.2 | 7.2 | 7.2 | 7.2 |
| Zinc oxide | | 3 | 3 | 3 | 3 | 3 | 3 | 3 |
| Stearic acid | | 2 | 2 | 2 | 2 | 2 | 2 | 2 |
| Anti-aging agent | | 1.5 | 1.5 | 1.5 | 1.5 | 1.5 | 1.5 | 1.5 |
| Specific plasticizer 1 | Tg -53°C | 40 | 50 | 50 | 47 | 50 | 40 | 50 |
| Specific plasticizer 2 | Tg -70°C | | | | | | | |
| Specific plasticizer 3 | Tg -94°C | 10 | | | 3 | | 10 | |
| Specific plasticizer 4 | Tg -100°C | | | | | | | |
| Comparative plasticizer | Tg -22°C | | | | | | | |
| Sulfur | | 1.5 | 1.5 | 1.5 | 1.5 | 1.5 | 1.5 | 1.5 |
| Vulcanization accelerator (CZ) | | 1.7 | 1.7 | 1.7 | 1.7 | 1.7 | 1.7 | 1.7 |
| Vulcanization accelerator (DPG) | | 2 | 2 | 2 | 2 | 2 | 2 | 2 |
| Average glass transition temperature (°C) of conjugated diene rubber and plasticizer | | -49.3 | -51.3 | -51.3 | -51.6 | -51.6 | -54.0 | -51.3 |
| Performance on icy and snowy road (E' (-10°C) index) | | 100 | 104 | 107 | 106 | 105 | 101 | 109 |
| Wet performance (tan δ (0°C) index) | | 100 | 97 | 94 | 100 | 98 | 100 | 89 |

[Table 1-2]

| Table 1 | Tg (°C) | Example | | | | | | | |
|---|---|---|---|---|---|---|---|---|---|
| | | 1 | 2 | 3 | 4 | 5 | 6 | 7 | 8 |
| Specific conjugated diene rubber 1 | -22 | 60 | 60 | 60 | | | | | |
| Specific conjugated diene rubber 2 | -22 | | | | 60 | | | 60 | 60 |
| Comparative conjugated diene rubber 1 | -22 | | | | | 40 | 60 | | |

(continued)

| Table 1 | Tg (°C) | Example | | | | | | | |
|---|---|---|---|---|---|---|---|---|---|
| | | 1 | 2 | 3 | 4 | 5 | 6 | 7 | 8 |
| Comparative conjugated diene rubber 2 | -22 | | | | | | | | |
| Specific conjugated diene rubber 3 | -63 | | | | | 50 | | | |
| Comparative conjugated diene rubber 3 | -63 | | | | | | | | |
| Specific conjugated diene rubber 4 | -93 | | | | | | 40 | | 40 |
| Comparative conjugated diene rubber 4 | -93 | 40 | 40 | 40 | 40 | 10 | | 40 | |
| Silica | | 90 | 90 | 90 | 90 | 90 | 90 | 105 | 105 |
| Carbon black | | 20 | 20 | 20 | 20 | 20 | 20 | 5 | 5 |
| Silane coupling agent | | 7.2 | 7.2 | 7.2 | 7.2 | 7.2 | 7.2 | 7.2 | 7.2 |
| Zinc oxide | | 3 | 3 | 3 | 3 | 3 | 3 | 3 | 3 |
| Stearic acid | | 2 | 2 | 2 | 2 | 2 | 2 | 2 | 2 |
| Anti-aging agent | | 1.5 | 1.5 | 1.5 | 1.5 | 1.5 | 1.5 | 1.5 | 1.5 |
| Specific plasticizer 1 | Tg -53°C | 40 | 40 | 40 | 40 | 40 | 40 | 40 | 40 |
| Specific plasticizer 2 | Tg -70°C | 10 | | | | | | | |
| Specific plasticizer 3 | Tg -94°C | | 10 | | 10 | 10 | 10 | 10 | 10 |
| Specific plasticizer 4 | Tg -100°C | | | 10 | | | | | |
| Comparative plasticizer | Tg -22°C | | | | | | | | |
| Sulfur | | 1.5 | 1.5 | 1.5 | 1.5 | 1.5 | 1.5 | 1.5 | 1.5 |
| Vulcanization accelerator (CZ) | | 1.7 | 1.7 | 1.7 | 1.7 | 1.7 | 1.7 | 1.7 | 1.7 |
| Vulcanization accelerator (DPG) | | 2 | 2 | 2 | 2 | 2 | 2 | 2 | 2 |
| Average glass transition temperature (°C) of conjugated diene rubber and plasticizer | | -52.4 | -54.0 | -54.4 | -54.0 | -53.5 | -54.0 | -54.0 | -54.0 |
| Performance on icy and snowy road (E' (-10°C) | | 97 | 95 | 92 | 91 | 98 | 98 | 88 | 86 |
| index) | | | | | | | | | |
| Wet performance (tan δ (0°C) index) | | 113 | 107 | 104 | 112 | 105 | 104 | 116 | 117 |

[Table 1-3]

| Table 1 | Tg (°C) | Comparative Example |
|---|---|---|
| | | 8 |
| Specific conjugated diene rubber 1 | -22 | 60 |
| Specific conjugated diene rubber 2 | -22 | |
| Comparative conjugated diene rubber 1 | -22 | |
| Comparative conjugated diene rubber 2 | -22 | |
| Specific conjugated diene rubber 3 | -63 | |
| Comparative conjugated diene rubber 3 | -63 | |
| Specific conjugated diene rubber 4 | -93 | |
| Comparative conjugated diene rubber 4 | -93 | 40 |

(continued)

| Table 1 | Tg (°C) | Comparative Example |
|---|---|---|
| Silica | | 90 |
| Carbon black | | 20 |
| Silane coupling agent | | 7.2 |
| Zinc oxide<br>Stearic acid<br>Anti-aging agent | | 3<br>2<br>1.5 |
| Specific plasticizer 1<br>Specific plasticizer 2<br>Specific plasticizer 3<br>Specific plasticizer 4 | Tg -53°C<br>Tg -70°C<br>Tg -94°C<br>Tg -100°C | 40<br><br>0<br> |
| Comparative plasticizer | Tg -22°C | 10 |
| Sulfur<br>Vulcanization accelerator (CZ)<br>Vulcanization accelerator (DPG) | | 1.5<br>1.7<br>2 |
| Average glass transition temperature (°C) of diene rubber and plasticizer conjugated | | -49.2 |
| Performance on icy and snowy road (E' (-10°C) C) index) | | 108 |
| Wet performance (tan δ (0°C) index) | | 105 |

The details of each of the components shown in Table 1 above are as follows.

- Specific conjugated diene rubbers 1 to 4: Specific conjugated diene rubbers 1 to 4 produced as described above
- Comparative conjugated diene rubbers 1 to 4: Comparative conjugated diene rubbers 1 to 4 produced as described above
- Silica: Zeosil 1165 MP (silica, CTAB adsorption specific surface area = 159 $m^2$/g, available from Rhodia)
- Carbon black: Show Black N339 (carbon black, available from Cabot Japan K.K.)
- Silane coupling agent: Si69 (silane coupling agent, bis(3-triethoxysilylpropyl)tetrasulfide)
- Zinc oxide: Zinc Oxide III (available from Seido Chemical Industry Co., Ltd.)
- Stearic acid: Stearic acid bead (available from NOF Corporation)
- Anti-aging agent: OZONONE 6C (available from Seiko Chemical Co., Ltd.)
- Specific plasticizer 1: Extract No.4 S (TDAE oil, glass transition temperature: -53°C, available from Showa Shell Sekiyu K.K.)
- Specific plasticizer 2: Process Oil 123 (paraffin oil, glass transition temperature: -70°C, available from Showa Shell Sekiyu K.K.)
- Specific plasticizer 3: LBR307 (liquid polybutadiene, glass transition temperature: -94°C, weight average molecular weight: 9000, available from KURARAY CO., LTD.)
- Specific plasticizer 4: tri(2-Ethylhexyl) phosphate) (glass transition temperature: -100°C, available from Lanxess)
- Comparative plasticizer: RICON100 (liquid styrene butadiene copolymer, glass transition temperature: -22°C, available from CRAY VALLEY)
- Sulfur: Golden Flower oil treated sulfur powder (sulfur content: 95.24 mass%, available from Tsurumi Chemical Industry Co., Ltd.)
- Vulcanization accelerator (CZ): NOCCELER CZ-G, available from Ouchi Shinko Chemical Industrial Co., Ltd.
- Vulcanization accelerator (DPG): 1,3-diphenylguanidine (Soxinol D-G, available from Sumitomo Chemical Co., Ltd.)

As can be seen from Table 1, Examples 1 to 8 each containing the specific conjugated diene rubber exhibited excellent performance on icy and snowy roads and wet performance.

From the comparison between Examples 4 and 2, the Example in which the specific conjugated diene rubber contained a PI block, exhibited superior performance on icy and snowy roads and wet performance.

From the comparison among Examples 1 to 3 (comparison among the aspects containing the specific conjugated diene rubber 1 as the specific conjugated diene rubber), the lower the glass transition temperature of the specific

plasticizer, the better performance on icy and snowy roads was exhibited.

From the comparison between Example 1 to 4 and Examples 5 and 6, when the conjugated diene rubber contained a specific conjugated diene rubber as a conjugated diene rubber having a higher glass transition temperature, superior performance on icy and snowy roads was exhibited.

From the comparison between Examples 7 and 8, when the conjugated diene rubber contained a specific conjugated diene rubber as a conjugated diene rubber having a higher glass transition temperature, and a specific conjugated diene rubber as a conjugated diene rubber having a lower glass transition temperature, superior performance on icy and snowy roads and wet performance were exhibited.

On the other hand, Comparative Example 1, in which the average glass transition temperature of the conjugated diene rubber and the plasticizer was higher than the predetermined range, the performance on icy and snowy roads and wet performance were insufficient.

On the other hand, Comparative Examples 2, 3 and 6, which contained no specific conjugated diene rubber, exhibited insufficient performance on icy and snowy roads and wet performance.

Comparative Examples 4 and 5, in which the content of the specific conjugated diene rubber was outside the predetermined range, the performance on icy and snowy roads and wet performance were insufficient.

In Comparative Example 7, in which the content of the silica was outside the predetermined range, the performance on icy and snowy roads and wet performance were insufficient.

Comparative Example 8, in which the average glass transition temperature of the conjugated diene rubber and the plasticizer was higher than the predetermined range, the performance on icy and snowy roads was insufficient.

Reference Signs List

1 Bead portion
2 Sidewall portion
3 Tire tread portion
4 Carcass layer
5 Bead core
6 Bead filler
7 Belt layer
8 Rim cushion

## Claims

**1.** A rubber composition for a tire tread for winter, comprising:

a conjugated diene rubber comprising 30 mass% or greater of a specific conjugated diene rubber;
a plasticizer comprising a specific plasticizer;
silica; and
a silane coupling agent,
a content of the specific plasticizer being 5 parts by mass or greater per 100 parts by mass of the conjugated diene rubber;
a content of the silica being 30 parts by mass or greater per 100 parts by mass of the conjugated diene rubber;
a content of the silane coupling agent being from 3 to 30 mass% with respect to the content of the silica;
the specific conjugated diene rubber being a conjugated diene rubber produced by a method for producing a conjugated diene rubber, the method comprising: a first step of polymerizing a monomer comprising a conjugated diene compound using a polymerization initiator in an inert solvent to produce a conjugated diene polymer chain having an active terminal; a second step of reacting the conjugated diene polymer chain having an active terminal with a polyorganosiloxane represented by General Formula (1) by adding the polyorganosiloxane to the conjugated diene polymer chain having an active terminal in a proportion of 1 mole or greater in terms of number of repeating units of the siloxane structure (-Si-O-) in the polyorganosiloxane relative to 1 mol of the polymerization initiator used in the first step; and a third step of reacting, with a compound represented by General Formula (2), the conjugated diene polymer chain reacted with the polyorganosiloxane in the second step; and
the specific plasticizer being a plasticizer having a glass transition temperature of -50°C or lower; and
an average glass transition temperature of the conjugated diene rubber and the plasticizer being lower than

-50°C:

[Chemical Formula 1]

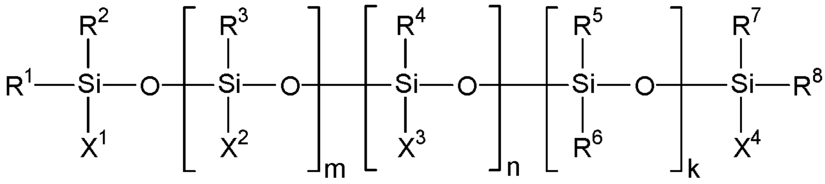

(1)

where $R^1$ to $R^8$ are alkyl groups having from 1 to 6 carbons or aryl groups having 6 to 12 carbons and may be the same or different from each other;
$X^1$ and $X^4$ are any groups selected from the group consisting of alkyl groups having from 1 to 6 carbons, aryl groups having from 6 to 12 carbons, alkoxy groups having from 1 to 5 carbons, and epoxy group-containing groups having from 4 to 12 carbons, and these groups may be the same or different from each other;
$X^2$ is an alkoxy group having from 1 to 5 carbons or an epoxy group-containing group having from 4 to 12 carbons, and the plurality of $X^2$ groups may be the same or different from each other;
$X^3$ is a group containing from 2 to 20 alkylene glycol repeating units, and when there are a plurality of $X^3$, they may be the same or different from each other; and
m is an integer from 3 to 200, n is an integer from 0 to 200, k is an integer from 0 to 200, and m + n + k is 3 or greater,

[Chemical Formula 2]

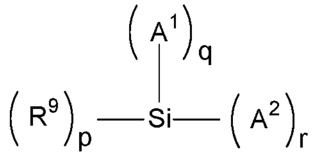

(2)

where $R^9$ is a hydrocarbyl group;
$A^1$ is a group capable of reacting with a reaction residue generated by a reaction between the conjugated diene polymer chain having an active terminal and the polyorganosiloxane;
$A^2$ is a group containing a nitrogen atom; and
p is an integer from 0 to 2, q is an integer from 1 to 3, r is an integer from 1 to 3, and p + q + r is 4.

**2.** The rubber composition for a tire tread for winter according to claim 1,
wherein the conjugated diene rubber further comprises a conjugated diene rubber (y) other than the specific conjugated diene rubber, and
an absolute value of a difference between a glass transition temperature of the specific conjugated diene rubber and a glass transition temperature of the conjugated diene rubber (y) is 30°C or higher.

**3.** The rubber composition for a tire tread for winter according to claim 1 or 2, wherein the glass transition temperature of the specific conjugated diene rubber is -60°C or lower.

**4.** The rubber composition for a tire tread for winter according to claim 1 or 2, wherein the glass transition temperature of the specific conjugated diene rubber is higher than -60°C.

**5.** The rubber composition for a tire tread for winter according to claim 1, wherein the conjugated diene rubber comprises a specific conjugated diene rubber (T1) having a glass transition temperature of higher than -60°C and a specific conjugated diene rubber (T2) having a glass transition temperature of - 60°C or lower.

**6.** The rubber composition for a tire tread for winter according to any one of claims 1 to 5, wherein the content of the silica is not less than 100 parts by mass per 100 parts by mass of the conjugated diene rubber.

**7.** The rubber composition for a tire tread for winter according to any one of claims 1 to 6,

wherein the specific conjugated diene rubber comprises:

a polymer block (A) containing from 80 to 100 mass% of an isoprene monomer unit and from 0 to 20 mass% of an aromatic vinyl monomer unit; and
a polymer block (B) containing from 50 to 100 mass% of a 1,3-butadiene monomer unit and from 0 to 50 mass% of an aromatic vinyl monomer unit,
the polymer block (A) and the polymer block (B) being formed in continuity.

**8.** The rubber composition for a tire tread for winter according to any one of claims 1 to 7, wherein the glass transition temperature of the specific plasticizer is -60°C or lower.

**9.** The rubber composition for a tire tread for winter according to any one of claims 1 to 8, wherein the content of the specific plasticizer is from 5 to 100 mass% relative to the total amount of the plasticizer.

**10.** The rubber composition for a tire tread for winter according to any one of claims 1 to 9, wherein the specific plasticizer comprises at least one type of plasticizer (p1) selected from the group consisting of paraffin oil, liquid polybutadiene, and phosphoric acid ester.

**11.** The rubber composition for a tire tread for winter according to claim 10, wherein the liquid polybutadiene has a weight average molecular weight from 2000 to 100000.

**12.** A pneumatic tire for winter comprising a tire tread portion produced by using the rubber composition for a tire tread for winter described in any one of claims 1 to 11.

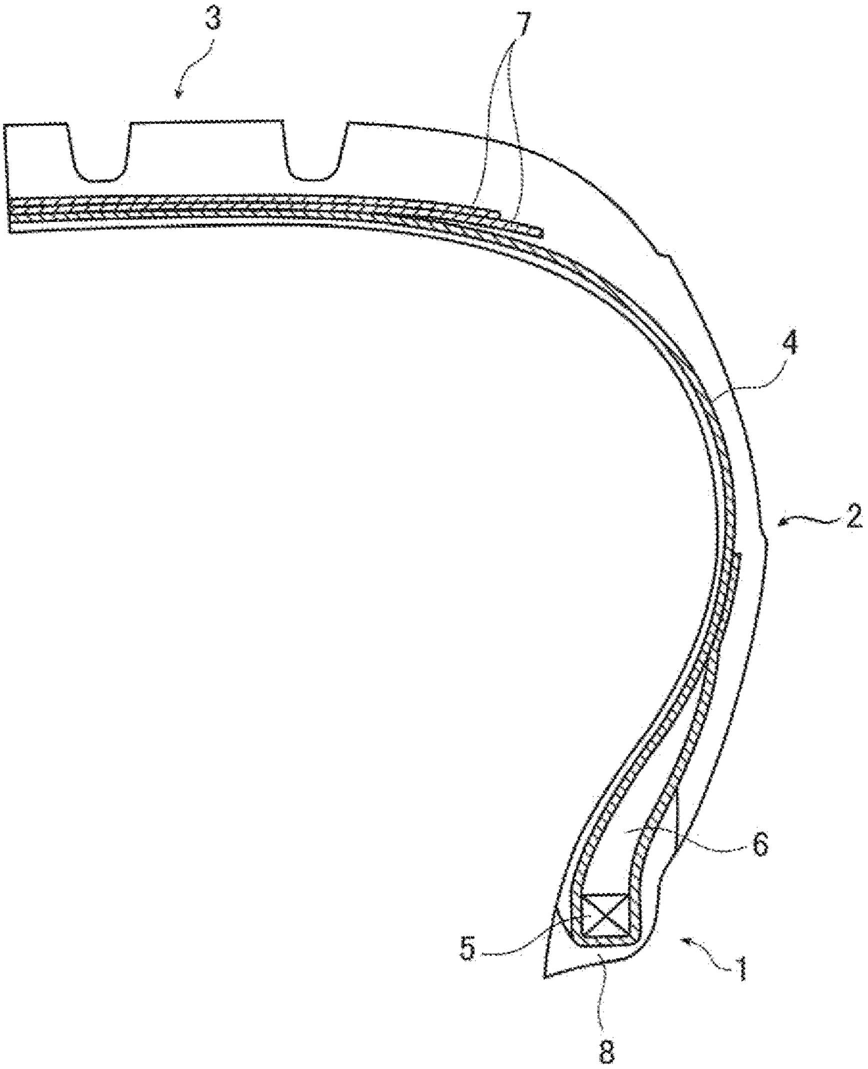


FIG. 1

## INTERNATIONAL SEARCH REPORT

International application No.
PCT/JP2019/019334

A. CLASSIFICATION OF SUBJECT MATTER
Int.Cl. C08L15/00(2006.01)i, B60C1/00(2006.01)i, C08C19/25(2006.01)i, C08K3/36(2006.01)i, C08K5/54(2006.01)i, C08L91/00(2006.01)i

According to International Patent Classification (IPC) or to both national classification and IPC

B. FIELDS SEARCHED

Minimum documentation searched (classification system followed by classification symbols)
Int.Cl. C08L15/00, B60C1/00, C08C19/25, C08K3/36, C08K5/54, C08L91/00

Documentation searched other than minimum documentation to the extent that such documents are included in the fields searched

| | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2017-82235 A (NIPPON ZEON CO., LTD.) 18 May 2017, claims, paragraph [0134], production examples 1-4, examples 1-4, table 1, etc. (Family: none) | 1-7, 9, 12<br>8, 10-11 |
| Y<br>A | JP 2009-203288 A (THE YOKOHAMA RUBBER CO., LTD.) 10 September 2009, claim 1, paragraphs [0005], [0009], [0012], examples, etc. (Family: none) | 8, 10-11<br>1-7, 9, 12 |
| A | JP 2017-82236 A (NIPPON ZEON CO., LTD.) 18 May 2017 (Family: none) | 1-12 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 22 July 2019 (22.07.2019) | 30 July 2019 (30.07.2019) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No. PCT/JP2019/019334

C (Continuation). DOCUMENTS CONSIDERED TO BE RELEVANT

| Category* | Citation of document, with indication, where appropriate, of the relevant passages | Relevant to claim No. |
|---|---|---|
| A | JP 2017-133026 A (NIPPON ZEON CO., LTD.) 03 August 2017 (Family: none) | 1-12 |
| A | JP 2017-110230 A (NIPPON ZEON CO., LTD.) 22 June 2017 (Family: none) | 1-12 |
| A | WO 2016/208739 A1 (NIPPON ZEON CO., LTD.) 29 December 2016 & US 2018/0170103 A1 & EP 3315535 A1 & CN 107709412 A & KR 10-2018-0022821 A | 1-12 |
| P, A | WO 2018/092716 A1 (NIPPON ZEON CO., LTD.) 24 May 2018 (Family: none) | 1-12 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2016047886 A